Europäisches Patentamt

European Patent Office

Office européen des brevets

(19)

(11) Numéro de publication : **0 161 992**
**B1**

(12) **FASCICULE DE BREVET EUROPÉEN**

(45) Date de publication du fascicule du brevet :
02.11.89

(51) Int. Cl.⁴ : **G 01 N 23/207**

(21) Numéro de dépôt : 85400954.5

(22) Date de dépôt : 15.05.85

(54) Appareil d'analyse de phases par diffraction de rayons X sur échantillon texturé ou non, utilisant un détecteur électronique de photons.

(30) Priorité : 15.05.84 FR 8407476

(43) Date de publication de la demande :
21.11.85 Bulletin 85/47

(45) Mention de la délivrance du brevet :
02.11.89 Bulletin 89/44

(84) Etats contractants désignés :
AT BE CH DE FR GB IT LI LU NL SE

(56) Documents cités :
DE--A-- 2 814 337
DE--A-- 2 910 534
GB--A-- 1 169 387
US--A-- 3 345 613
ZEITSCHRIFT FÜR METALLKUNDE, vol. 75, no. 2,
pages 133-139, février 1984; K.H. PUCH et al.; "A new
computer operated texture goniometer"
MEDICAL PHYSICS, vol. 10, no. 5, Septembre-Octobre 1983, pages 655-663; D.B. PLEWES et al.: "A
scanning system for chest radiography with regional
exposure control: Practical implementation"
MESSEN + PRÜFEN/AUTOMATIK, no. 4, April 1981,
pages 210-211; P.H. CYRIS et al.: "Programmierbares
Vierkreis-Diffraktometer mit Translationstisch"

(73) Titulaire : ASSOCIATION POUR LA RECHERCHE ET
LE DEVELOPPEMENT DES METHODES ET PROCES-
SUS INDUSTRIELS (ARMINES)
60, Boulevard Saint-Michel
F-75272 Paris Cédex 06 (FR)

(72) Inventeur : Fillit, René Yves
12, rue de la Métare
F-42100 Saint-Etienne (FR)
Inventeur : Bruyas, Huguette
35, rue Montagny
F-42100 Saint-Etienne (FR)
Inventeur : Patay, Fernand
12, rue Ampère
F-42000 Saint-Etienne (FR)

(74) Mandataire : Bruder, Michel
Cabinet Michel Bruder Conseil en Brevets 10, rue de
la Pépinière
F-75008 Paris (FR)

## Description

La présente invention concerne un appareil d'analyse de phases par diffraction de rayons X sur un échantillon texturé ou non en utilisant un détecteur électronique de photons.

Les appareils d'analyse par diffraction de rayons X ou diffractomètres du type précité, qui sont connus actuellement, comportent une source de rayons X associée à un générateur haute tension, un goniomètre du type $\theta - 2\theta$, un détecteur de photons RX associé à un compteur électronique et parfois un ordinateur associé à un organe de commande pour piloter l'acquisition des données numériques en parallèle avec les mouvements du goniomètre, cet ordinateur servant également au traitement de données numériques.

En général tous les diffractomètres connus se distinguent en ce qui concerne le dispositif support d'échantillon, ce dernier étant en effet spécialisé en fonction du type de mesure à effectuer.

Dans les diffractomètres pour l'analyse des phases, le porte-échantillon est fixe ou, au plus, il tourne autour d'un axe $\beta$ perpendiculaire au plan de l'échantillon et situé dans le cercle de focalisation du goniomètre en passant par le centre de ce cercle (méthode des poudres). Tel est le cas des diffractomètres Philips PW1050, Siemens D500, etc.

Dans un diffractomètre pour l'analyse de textures le porte-échantillon est mobile autour de deux axes supplémentaires $\beta$ et $\varphi$, l'axe $\beta$ étant toujours normal au plan de l'échantillon défini ci-dessus tandis que l'axe $\varphi$ est orthogonal à l'axe $\theta$ et tangent au cercle de focalisation. Toutefois, pour permettre les analyses de textures en réflexion et transmission, l'axe $\varphi$ est matérialisé par un cercle situé dans le plan bissecteur du faisceau de rayons X incident et du faisceau de rayons X diffracté, l'axe de ce cercle étant l'axe défini ci-dessus. Tel est le cas des goniomètres de texture Philips PW1078 ou Siemens D500TX ou de ceux décrits dans le brevet US-A-3 345 613 et l'article de K.H. PUCH de la revue ZEITSCHRIFT FUR METALLKUNDE vol. 75n n° 2, février 1984, ayant pour titre « A new computer operated texture goniometer » (pages 133-139).

Enfin dans un diffractomètre prévu pour l'analyse de contraintes résiduelles, le porte-échantillon a toujours un autre axe de rotation : dans ce cas on peut distinguer la méthode dite $\Omega$ où cet axe de rotation est confondu avec l'axe $\theta$ du goniomètre, et la méthode $\psi$ dans laquelle l'axe de rotation est l'axe $\varphi$ défini précédemment. Tel est le cas du goniomètre D500ST ou de la réalisation de J. Godijk, S. Nannenberg et PF Willemse : « A goniometer for the measurement of stresses in single crystals and coarse grained specimens » J. Appl. Cryst (1980) 13, 128-131, ou le goniomètre d'analyse de textures et de contraintes de Seifert : TS.

Ces appareils connus présentent l'inconvénient que leurs porte-échantillons, quel que soit leur type et même s'ils peuvent s'associer à un même goniomètre $\theta - 2\theta$, sont conçus pour un type de mesure bien particulier et ne permettent pas de passer aisément d'un type de mesure à un autre. En particulier aucun dispositif support d'échantillon ne permet d'effectuer simultanément et rapidement une analyse de phases (exploration en $\theta - 2\theta$) et une analyse de textures (exploration selon $\beta$ et $\varphi$), et ce systématiquement pour chaque position $\theta_i - 2\theta_i$. Or une telle possibilité est fondamentale car elle seule permet d'analyser des phases texturées dans des éprouvettes massives ou en poudre et de les doser. Des montages ont été conçus dans ce but mais le domaine exploré en $\varphi$ est très réduit (cas de l'appareil qui avait été fabriqué par la Société SIEMENS avec tournant et $\varphi = \pm 3°$ et qui n'est plus commercialisé) ou aléatoire (cas du montage électromécanique décrit dans l'article « Volume Fraction Analysis of Phases in Textured Alloys » de R.L. Miller, Transactions of the ASM, Volume 61, 1968, pages 592-597) et non informatisable. Donc ces méthodes d'exploration incomplète du domaine ($\beta$, $\varphi$) et sans traitement numérique, en différé, possible, ne corrigent que très partiellement les effets de texture lors du dosage des phases texturées. Par ailleurs elles ne sont absolument pas prévues pour l'analyse de texture proprement dite ou l'analyse de contraintes résiduelles.

Par contre ces méthodes d'exploration systématique sont déjà décrites dans les articles suivants :

— « Dosage de l'austénite résiduelle par RX sur des échantillons massifs texturés »
R. Fillit, H. Bruyas, A. Poulalion, F. Maratray
International Conference on Industrial Inorganic Elementary Analysis 1-5 Juin 1981 Spectra 2000 n° 68 June 1981.

— « Measurement of austenite content in various textured alloys »
R. Fillit, H. Bruyas, F. Maratray, A. Poulalion, TMS AIME
Annual Meeting 14-18 February 1982 paper n° A82-10.

— « Nouvelle méthode d'analyse par RX »
R. Fillit, H. Bruyas, F. Maratray, A. Poulalion
Cercle d'Etude des Métaux, Congrès International sur les Méthodes d'investigation des Métaux, Saint-Etienne, Novembre 1982.

La présente invention vise à remédier à ces inconvénients en procurant un appareil de conception remarquablement simple et permettant des applications dans des domaines d'analyses très variés.

A cet effet cet appareil d'analyse de phase par diffraction de rayons X sur un échantillon texturé ou non, comportant une source de rayons X émettant, en direction d'un échantillon monté sur un support, un faisceau de rayons X incident, un détecteur de photons recevant le faisceau de rayons X diffracté par l'échantillon, un goniomètre du type $\theta$-2 $\theta$ pour faire varier l'angle d'incidence $\theta$ du

faisceau de rayons X tombant sur l'échantillon et pour déplacer d'un angle 2 θ correspondant le détecteur de photons, ces deux mouvements θ et 2 θ se faisant autour d'un même premier axe, au moins un compteur électronique ou un compteur multicanal connecté d'une part au détecteur de photons X et d'autre part à un ordinateur servant au traitement de données numériques, et des moteurs pas à pas pour déplacer le porte-échantillon autour de deux axes supplémentaires concourants β et φ, à savoir un deuxième axe β toujours normal au plan de l'échantillon et un troisième axe φ perpendiculaire au premier axe θ et au deuxième axe β et tangent au cercle de focalisation, est caractérisé en ce qu'au moins le moteur commandant le mouvement autour du deuxième axe β est en prise directe avec le porte-échantillon et le boîtier contenant le moteur d'entraînement du porte-échantillon est lui-même monté à rotation, autour du troisième axe φ, sous la commande directe ou indirecte du moteur pas à pas associé, par l'intermédiaire de deux éléments coaxiaux disposés des deux côtés du boîtier et solidaires de celui-ci, qui sont montés à rotation sur des montants ou sur des pièces rapportées sur ces montants, ces montants ou ces pièces fixes étant fendus horizontalement, du côté avant c'est-à-dire vers les faisceaux de rayons X incident et réfléchi, au niveau de ces faisceaux, la largeur de chaque fente étant au moins égale à la hauteur de ces faisceaux de rayons X, chaque élément rotatif solidaire du boîtier étant lui-même tronqué sur sa longueur d'un volume ayant une section droite supérieure à un quadrant pour permettre le passage, le long de ces éléments rotatifs, de faisceaux de rayons X incident et diffracté allant de l'incidence rasante (θ = 0°) à l'incidence normale (θ = 90°) quel que soit l'angle φ dans le domaine φ (0,90°) au moins.

Cet ensemble est avantageusement complété par un dispositif de focalisation des faisceaux de RX, incident et diffracté, ayant quatre rôles importants à savoir :

  a) effectuer des mises au point très fines,
  b) obtenir un excellent alignement de l'ensemble goniométrique,
  c) atténuer très fortement les effets de défocalisation, les effets géométriques et les effets d'absorption qui nuisent à la qualité des mesures.
  d) adapter la divergence du faisceau incident à la dimension de la zone à analyser.

L'appareil suivant l'invention offre de nombreux avantages. Les principaux sont :
  — de mettre en œuvre une méthode totalement non destructive (contrairement à la méthode des poudres).
  — de permettre d'analyser une très grande variété d'échantillons (massifs ou en poudre, texturés ou non) et dont les formes peuvent être les plus variées avec une seule condition : une zone plane pour l'analyse.
  — d'effectuer, sur la même zone d'un échantillon, plusieurs types complémentaires d'analyses structurales (identification et dosage de phase, analyse de texture, analyse de contraintes résiduelles, etc.) sans limite angulaire d'exploration pour les différents mouvements θ, 2 θ, β, φ.
  — rendre possible la comparaison avec d'autres techniques d'analyse (car méthode non destructive) comme la microscopie optique ou électronique à balayage, la microsonde, etc.

En d'autres termes, l'appareil suivant l'invention constitue un moyen d'investigation moderne particulièrement efficace et bien adapté aux analyses pluridisciplinaires complémentaires.

Ces avantages sont obtenus par ailleurs grâce à une logique à très grande souplesse de commande qui, en plus d'une fonction interne permettant d'animer manuellement les différents mouvements θ, 2 θ, β, φ (prépositionnement, réglages, tests, etc.) peut être associée à l'horloge et à l'ordinateur pour permettre de piloter l'ensemble des déplacements suivant les trois axes selon deux modes automatiques différents (en plus du mode manuel) utilisés suivant le type de mesure à effectuer, à savoir un mode·séquentiel dans lequel les mouvements s'enchaînent séquentiellement et un mode en temps globalisé dans lequel les mouvements sont imposés par leurs durées ou leurs vitesses. Par ailleurs, quel que soit le mode d'analyse adopté on peut prévoir en outre deux processus d'acquisition différents suivant que l'on fixe ou non un seuil à partir duquel une saisie de mesure est effectuée.

Dans le processus d'acquisition « déclenché » les acquisitions des données sont fonction de l'intensité du signal RX reçu par le détecteur. Quel que soit le mode choisi, les mesures s'arrêtent automatiquement en fin d'exploration du domaine θ — 2 θ, β, φ, désiré avec émission d'un signal FIN pour stopper le programme ordinateur ou bien en fonction du nombre total de points de mesure désiré qui peut être contrôlé indépendamment par l'ordinateur.

L'exploration en (φ) peut être soit cyclique comme par exemple (0 → φ$_M$ → 0 → etc.) ou (0 → φ$_M$ → — φ$_M$ → 0 etc.) ou plus généralement (φ$_i$ → φ$_M$ → φ$_i$ → etc.), soit unique (φ$_i$ à φ$_M$).

Par ailleurs la logique de commande, l'horloge et l'ordinateur associés au dispositif mécanique rendent possible la correction des effets de défocalisation, des effets géométriques et des effets d'absorption qui subsistent, en fonction de φ. Ces corrections peuvent être effectuées soit lors du traitement, en différé, des données numériques, soit simultanément au cours de l'acquisition.

Une caractéristique essentielle de l'invention est que la conception de la partie mécanique animant le porte-échantillon allie la simplicité des solutions choisies à la précision des positionnements et a permis de constituer un système à la fois de haute performance, peu onéreux et versatile par rapport aux dispositifs concurrents.

Le dispositif porte-échantillon et l'ensemble de focalisation peuvent être mis en position pour réaliser un montage θ — 2 θ classique.

Par simples affichages dans la logique de commande, l'utilisation d'un des deux modes de fonctionnement possibles et des deux processus d'acquisition (ou une combinaison entre eux) et l'exécution de programmes de l'ordinateur adaptés, l'appareil suivant l'invention permet d'effectuer les analyses de diffraction de rayons X suivantes, sur des échantillons texturés ou non, massifs ou en poudre :

— Identification des phases présentes ;

— Dosage des phases ;

— Figures de pôle en réflexion et fonction de distribution des orientations ;

— Figures de pôle ultra rapides en fonction de l'intensité RX reçue ou plusieurs figures de pôles simultanées dans le cas de l'utilisation d'un détecteur à localisation de rayons X ;

— Identification ultra rapide des phases en fonction de l'intensité RX reçue ;

— Analyse microstructurale de phases inconnues, texturées ou non.

— Orientation de monocristaux ou mesures de désorientation entre bicristaux etc. ;

— Mesures de cristallographie (structure du système cristallisé ; paramètre de maille, etc.) ;

— Mesures de contraintes résiduelle ; et de tailles de cristallites ;

— Degré de cristallinité d'une phase partiellement amorphe.

— Stoechiométrie d'une phase.

— Diffraction de rayons X en incidence rasante pour l'analyse de couches superficielles.

Il est à noter, tout d'abord, que le prototype réalisé suivant l'invention utilise un goniomètre receveur θ — 2 θ dit « horizontal » de marque Philips type (PW 1380) et on décrira donc, dans ce qui va suivre, une adaptation particulière à ce type de goniomètre. Cependant l'appareil suivant l'invention devra subir quelques modifications de forme et de ses fixations ainsi que des renforcements de certaines structures dans le cas d'utilisation d'autres types de goniomètre receveur (et en particulier de goniomètres verticaux) sans pour cela sortir du cadre de l'invention.

De même la nature du détecteur de photons RX utilisé (proportionnel, à scintillation, à discrimination en énergie (SiLi) ou à localisation (détecteur linéaire etc.) ne change pas la nature de l'invention.

Du fait de sa conception mécanique particulière, l'appareil suivant l'invention permet d'obtenir un très grand domaine de variations de vitesse en ce qui concerne les mouvements autour du deuxième axe β et du troisième axe φ, cette vitesse pouvant varier par exemple d'un tour par heure à dix tours par seconde. Le dispositif électromécanique commandant les mouvements autour des deuxième et troisième axes est avantageusement réalisé sous la forme d'une unité amovible pouvant être rendue solidaire, par l'intermédiaire de trois points d'appui et d'une vis de blocage, du goniomètre receveur θ — 2 θ. Ceci rend particulièrement aisés les réglages d'alignement et la reproductibilité de la mise en position dans le cas où cette unité amovible est ôtée puis remise sur le goniomètre. Enfin le perçage des axes φ, associé à une rotation θ de l'appareil, indépendante du goniomètre receveur, et le blocage de cette rotation par tampon tangent rend possible et de façon simple le réglage du $O_\theta$ du dispositif en coïncidence avec le $O_\theta$ du goniomètre receveur.

Ces différents modes de liaison (positionnement, entraînement et alignement) dépendent du goniomètre θ — 2 θ receveur et l'homme de l'art pourra facilement concevoir d'autres formes simples dérivées pour l'adapter sur les goniomètres disponibles (ou à venir) sur le marché.

Les mouvements suivant les deuxième et troisième axes β et φ sont obtenus par une prise directe ou semi-directe sur les moteurs pas à pas correspondants. On obtient ainsi un coefficient démultiplicateur égal à 1 ou proche de 1 pour permettre un plus grand domaine de variation de vitesse, notamment vers les hautes vitesses, et d'obtenir des temps de réponse courts.

Ainsi l'appareil peut utiliser un mode de transmission par courroies crantées et armées et un système de tension automatique de courroies ; ce système est particulièrement simple et efficace pour des mouvements à la fois précis et rapides. Par ailleurs l'utilisation de moteurs pas à pas de haute qualité permet d'obtenir une excellente reproductibilité des positionnements relatifs (par exemple à mieux que 0,054° près selon les moteurs pas à pas choisis).

Le porte-échantillon est mobile le long de l'arbre de sortie du moteur commandant la rotation autour du deuxième axe β. Associée à la matérialisation du plan tangent au cercle de focalisation cette disposition permet la mise en position rapide de la face plane à analyser de l'échantillon à 0,01 mm près (quelle que soient par ailleurs les autres faces de l'échantillon, planes ou non, parallèles ou non) sur le cercle de focalisation du goniomètre θ — 2 θ, la mise en position absolue de l'angle avec une incertitude inférieure à 1° près et la mise en position relative à 0,054° près, et enfin la mise en position en translation de la zone de l'échantillon à analyser avec une incertitude inférieure à 0,1 mm près grâce à un double système mécanique ou lumineux. Ce système visualise la zone plane analysée mais également rend possible l'analyse d'une zone plane pouvant être en dépression par rapport au niveau supérieur de l'échantillon et bien sûr le dispositif de focalisation permet d'adapter la divergence du faisceau de rayons X incident à la taille de la zone analysée.

L'ensemble mobile autour du troisième axe φ peut être avantageusement équilibré par un contrepoids amovible pour permettre une grande vitesse de rotation autour de cet axe. La forme semi-circulaire et conique de ce contrepoids permet des mesures sans phénomène d'écran dans le domaine θ (0 à + 85°) et φ (0 à 90°) par exemple.

La nature des interfaces entre la logique, l'horloge et l'ordinateur (standard RS 232, IEEE 488 ou autre) ne change en rien la nature de l'invention.

On décrira ci-après, à titre d'exemple non limitatif, une forme d'exécution de la présente invention, en référence au dessin annexé sur lequel :

La figure 1 est un schéma synoptique d'un appareil d'analyse par diffraction de rayons X suivant l'invention.

La figure 2 est une vue en coupe verticale, dans un plan passant par les axes θ et φ, du dispositif commandant les mouvements de rotation de l'échantillon suivant trois axes concourants, le contrepoids équilibreur étant supposé enlevé.

La figure 3 est une vue en coupe verticale faite suivant la ligne III-III de la figure 2 c'est-à-dire dans le plan contenant les axes θ et β, le contrepoids équilibreur étant représenté fixé.

La figure 4 est une vue en coupe verticale du contrepoids.

La figure 5 est une vue en coupe horizontale faite suivant la ligne V-V de la figure 4.

La figure 6 est une vue de profil du contrepoids, prise de la gauche sur la figure 4.

La figure 7 est une vue en plan d'un calibre utilisé pour la mise en place de l'échantillon dans le plan de référence lorsque la zone plane analysée est en dépression par rapport au bord de l'échantillon.

La figure 8 est une vue en plan schématique d'un émetteur de faisceaux lumineux utilisé pour la mise en place de la zone à analyser de l'échantillon dans le faisceau de rayons X incident.

La figure 9 est une vue en perspective schématique d'un dispositif assurant la focalisation du faisceau de rayon X incident.

La figure 10 est une vue en plan partielle de l'échantillon illustrant l'effet d'écran des diverses fentes de focalisation.

La figure 11 est une vue en perspective d'un dispositif de focalisation du faisceau diffracté.

La figure 12 est une vue en perspective d'une variante d'exécution du dispositif de focalisation du faisceau diffracté.

La figure 13 est un exemple de diagramme de phase possible des divers mouvements de rotation suivant les axes θ, β et φ ; généralement $\beta_{max} = 360°$.

La figure 14 est un schéma synoptique d'un circuit de commande du pas d'un mouvement entrant dans la logique de commande.

La figure 15 est un schéma synoptique d'un circuit synthétiseur d'impulsions d'horloge pour permettre la coordination des différents mouvements et des acquisitions.

La figure 16 est un schéma synoptique d'un circuit sommateur pour contrôler à chaque instant la position de chaque rotation.

La figure 17 est un schéma synoptique d'un compteur « temps » et « coups » classique avec les signaux utilisés dans la logique de commande.

La figure 18 est un schéma synoptique d'un circuit de remise à zéro général, de pilotage manuel, d'interconnexion des différents circuits suivant le type de mesure choisie et d'interconnexion de la logique avec l'ordinateur.

La figure 19 est un schéma synoptique de la logique de commande avec ses différents circuits, les différents modes de fonctionnement (séquentiel, temps globalisé) et les 2 processus d'acquisition (systématique ou déclenché) étant mis en évidence pour deux types d'analyse à savoir analyse de phase et analyse de texture.

La figure 20 est une projection stéréographique d'un domaine possible d'analyse dans le cas où le domaine d'exploration β ne s'étend pas sur un tour complet.

La figure 21 est une vue de profil schématique d'une variante d'exécution du dispositif permettant la rotation du boîtier porte-échantillon autour du troisième axe φ.

La figure 22 est une vue en plan des deux demi-arbres tronqués du dispositif de la figure 21, l'ensemble du boîtier contenant le porte-échantillon étant enlevé dans un but de simplification.

La figure 23 est une vue en coupe verticale partielle d'une variante d'exécution des parties extrêmes supérieures des montants formant paliers pour l'ensemble du boîtier pivotant autour du troisième axe φ.

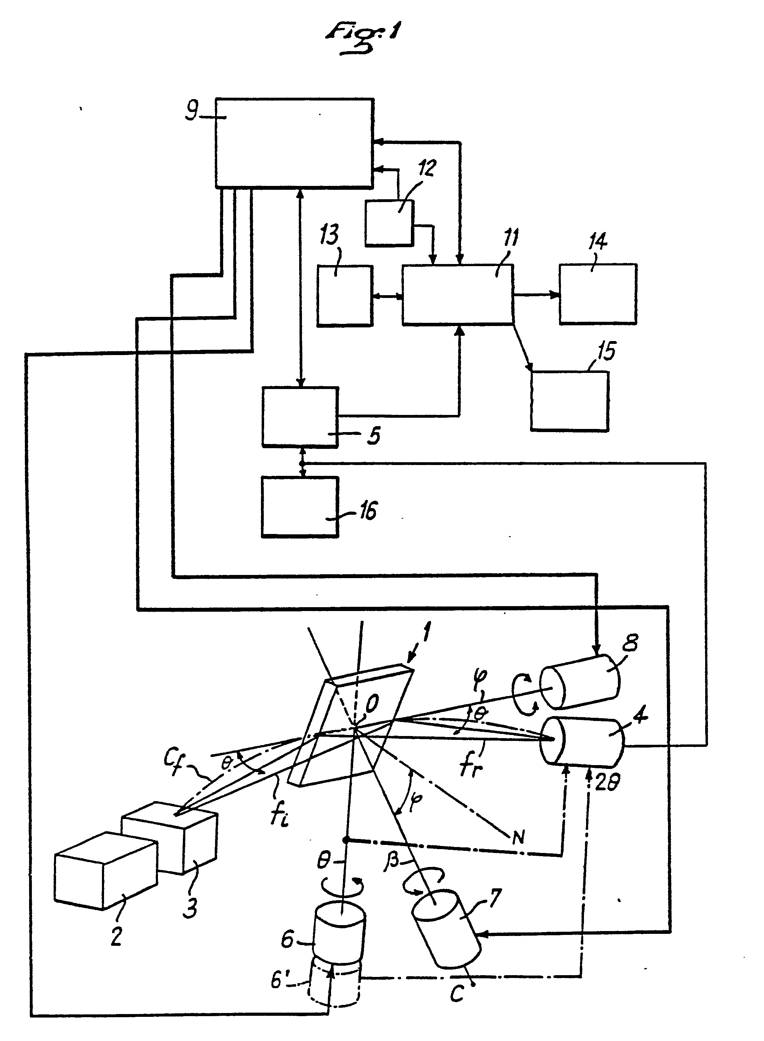

L'appareil d'analyse de phase par diffraction de rayons X suivant l'invention est associé à un goniomètre classique θ — 2θ et son schéma synoptique est représenté sur la figure 1. Sur cette figure est représenté un échantillon 1 soumis à l'analyse qui reçoit un faisceau de rayons X incident $f_i$ en provenance d'une source de rayons X 2, après avoir passé à travers un dispositif de focalisation 3, et qui renvoie un faisceau réfracté $f_r$ en direction d'un détecteur de photons 4 relié à un ou deux compteurs électroniques 5.

L'échantillon 1 est soumis, par le goniomètre, à une première rotation autour d'un axe vertical θ, le détecteur de photons 4 étant lui déplacé, par des moyens conventionnels, d'un angle 2θ pour pouvoir recevoir toujours le faisceau diffracté $f_r$ en provenance de l'échantillon 1. Le mouvement de rotation de l'échantillon 1 autour de l'axe vertical θ est assuré par un premier moteur pas à pas 6. Dans le cas où le couplage du mouvement 2θ n'est pas assuré mécaniquement un moteur supplémentaire 6' peut assurer la rotation du détecteur 4.

L'échantillon 1 peut également tourner autour d'un deuxième axe β perpendiculaire au plan de l'échantillon 1 et situé, pour φ = 0, dans le cercle de focalisation $C_f$ du goniomètre, l'axe β passant par le centre C de ce cercle de focalisation. Le mouvement de rotation de l'échantillon 1 autour du deuxième axe β est assuré au moyen d'un deuxième moteur pas à pas 7.

Enfin l'échantillon 1 est également mobile en rotation autour d'un troisième axe φ contenu dans le plan de la surface de l'échantillon 1, orthogonal aux axes β et θ et tangent au cercle de focalisation $C_f$, au point O situé sur la surface de l'échantillon 1 et où concourent les trois axes de rotation θ, β et φ. Le mouvement de l'échantillon 1 autour du troisième axe φ est commandé également par un troisième moteur pas à pas 8.

Les trois ou quatre moteurs pas à pas 6, 6', 7, 8 sont connectés à des sorties d'une logique de commande 9 reliée à un ordinateur 11 et pilotée par une horloge 12, que pilote également l'ordinateur 11. La logique de commande 9 est également connectée à un ou deux compteurs 5 ou multicanal dont un est par ailleurs relié à l'ordinateur 11. Cet ordinateur 11 est associé à des unités de sortie telles qu'un écran 13, une table traçante numérique 14 et une imprimante 15. Le détecteur de photons 4 peut être également relié à un enregistreur analogique 16, en plus du compteur électronique 5.

L'ordinateur 11 pilote, conjointement avec l'horloge programmable 12 et la logique de commande 9, la coordination de l'ensemble des mouvements de rotation suivant les axes $\theta$, $\beta$ et $\varphi$, leurs vitesses, leurs durées, ainsi que l'acquisition des intensités mesurées du faisceau de rayons X diffracté $f_r$.

On décrira maintenant, en se référant plus particulièrement aux figures 2 et 3, la façon dont sont réalisés les mouvements de l'échantillon 1 suivant les trois axes $\theta$, $\beta$ et $\varphi$.

Le dispositif commandant les mouvements de rotation suivant les axes $\beta$ et $\varphi$ constitue une unité amovible 19 qui peut être montée sur un goniomètre conventionnel à mouvement $\theta - 2\theta$. Ce goniomètre est représenté uniquement, sur les figures 2 et 3, par un arbre vertical 17 d'axe $\theta$ et qui est entraîné en rotation, à sa partie inférieure, par le premier moteur pas à pas 6 non représenté sur les figures 2 et 3. Cet arbre vertical 17 est solidaire, à son extrémité supérieure, d'une platine transversale et horizontale 18 sur laquelle est fixé l'ensemble 19 commandant les mouvements de l'échantillon suivant les axes $\beta$ et $\varphi$. Cet ensemble 19 comporte, à sa partie inférieure, une embase 21 qui vient coiffer la platine 18, de manière à pouvoir être orientée en rotation $\theta$ sur celle-ci (réglage du $O_\theta$ du dispositif suivant l'invention égal à $O_\theta$ du goniomètre receveur). Le blocage de l'embase 21 sur la platine 18, une fois le réglage effectué, est réalisé au moyen d'un tampon tangent 22. La platine 18 est elle-même rendue solidaire du goniomètre receveur et de son entraînement en rotation $\theta$ par une vis de blocage 22a. L'embase 21 est solidaire de deux montants 23, 24 s'étendant vers le haut et portant, à leurs extrémités supérieures, des paliers respectifs 25, 26 matérialisant le troisième axe de rotation $\varphi$. Le montage de l'embase 21 sur la platine 18 est réalisé dans une seule position possible de telle façon que le troisième axe $\varphi$ soit situé dans un plan vertical contenant le premier axe $\theta$ et perpendiculairement à celui-ci. Ceci est réalisé en prévoyant trois points d'appui A, B, C réglables verticalement entre l'ensemble du dispositif et le goniomètre receveur, lesquels, avec le tampon tangent 22 et les axes percés $\varphi$, facilitent considérablement la mise en position de l'axe $\varphi$ (il intercepte l'axe $\theta$, lui est perpendiculaire et pour $\theta = 0$ est aligné avec le foyer de rayons X).

Les deux montants 23, 24 portent, par l'intermédiaire des paliers 25, 26, un ensemble basculant autour de l'axe $\varphi$. Cet ensemble comprend un boîtier 27 se terminant, à son extrémité antérieure, par une bride transversale 28. Cette bride est fraisée pour matérialiser le plan tangent au cercle de focalisation (face de référence 28r). Cette bride 28 est à son tour prolongée vers l'extérieur, horizontalement, par deux pattes diamétralement opposées 29, 31 dans lesquelles s'engagent des petits arbres respectifs 32, 33 percés axialement. L'arbre 33 engagé dans le montant droit constitue simplement un tourillon tandis que l'arbre 32 traversant le montant gauche 23 constitue un arbre d'entraînement en rotation autour de l'axe $\varphi$. Cet arbre 32 est accouplé mécaniquement à la patte 29 et il est solidaire, à son extrémité externe, d'une poulie 34 sur laquelle passe une courroie renforcée et armée 35 reliée à une autre poulie 36 d'un réducteur de vitesse 37. La poulie 36 est solidaire d'un arbre 38 sur lequel est calée une poulie 39 de diamètre supérieur à la précédente, cette poulie 39 étant reliée, par une courroie armée 41, à une poulie 42 solidaire de l'arbre de sortie du moteur pas à pas 8 commandant la rotation autour de l'axe $\varphi$. Ce moteur 8 est porté par l'embase 21 comme on peut mieux le voir sur la figure 3.

La poulie 39 peut porter avantageusement, le long de sa périphérie, une graduation permettant d'indiquer la valeur de l'angle de rotation ou de prépositionner l'angle initial $\varphi_i$ autour du troisième axe $\varphi$.

L'arbre 38 portant les poulies 36 et 39 du réducteur 37 est porté par un bras 43 articulé, à son extrémité inférieure, sur l'embase 21, autour d'un axe 44, et qui est sollicité, dans les deux sens de pivotement, par un ressort de rappel 46. L'arbre 38 de la poulie 39 est ainsi mobile dans l'espace, sous l'action du ressort de rappel 46, de manière à compenser les jeux des courroies 35, 41.

A l'intérieur du boîtier 27 est logé le moteur pas à pas 7 commandant la rotation de l'échantillon 1 autour de l'axe $\beta$. L'arbre de sortie 48 du moteur pas à pas 7 est solidaire d'un porte-échantillon 49 qui est immobilisé axialement sur l'arbre 48, dans une position réglable, au moyen d'un tampon tangent transversal 51. L'échantillon 1 est fixé sur la face frontale du porte-échantillon 49 et ce de telle façon que la face plane externe 1a de cet échantillon 1 soit située dans le plan de référence vertical P passant par l'axe $\theta$ et l'axe $\varphi$ lorsque l'angle de basculement de l'échantillon 1 autour de l'axe $\varphi$ est égal à zéro. D'où le mode de mise en position, simple et rapide, d'une face plane d'un échantillon à analyser ne présentant pas d'aspérité émergente : l'échantillon est fixé au moyen d'un adhésif sur le porte-échantillon 49 (ou au moyen d'une pâte à modeler si la face opposée à la face analysée n'est ni plane ni parallèle à celle-ci) et on fait coulisser le porte-échantillon 49 jusqu'à ce que la face 1a de l'échantillon vienne en contact sur une règle de référence plane, maintenue plaquée, momentanément, sur la face 28r. On immobilise ensuite le porte-échantillon 49 sur l'arbre 48 au moyen du tampon tangent 51 et on ôte la règle.

Le porte-échantillon 49 peut porter avantageusement, le long de sa périphérie, une graduation permettant d'indiquer la valeur de l'angle de rotation, ou de prépositionner l'angle initial $\beta_i$, autour du deuxième axe $\beta$.

Comme on peut le voir sur la figure 2, le porte-échantillon 49 présente de préférence, dans sa face frontale, une fente diamétrale 49a de très faible largeur, contenue dans le plan vertical passant le deuxième axe $\beta$. Cette fente 49a qui a, par exemple, une largeur de 0,1 mm, une profondeur de 5 mm et une longueur de 20 mm, est destiné à permettre l'insertion d'une lame mince perpendiculairement au plan de la face frontale du porte-échantillon 49, en vue de l'analyse de cette lame mince en transmission.

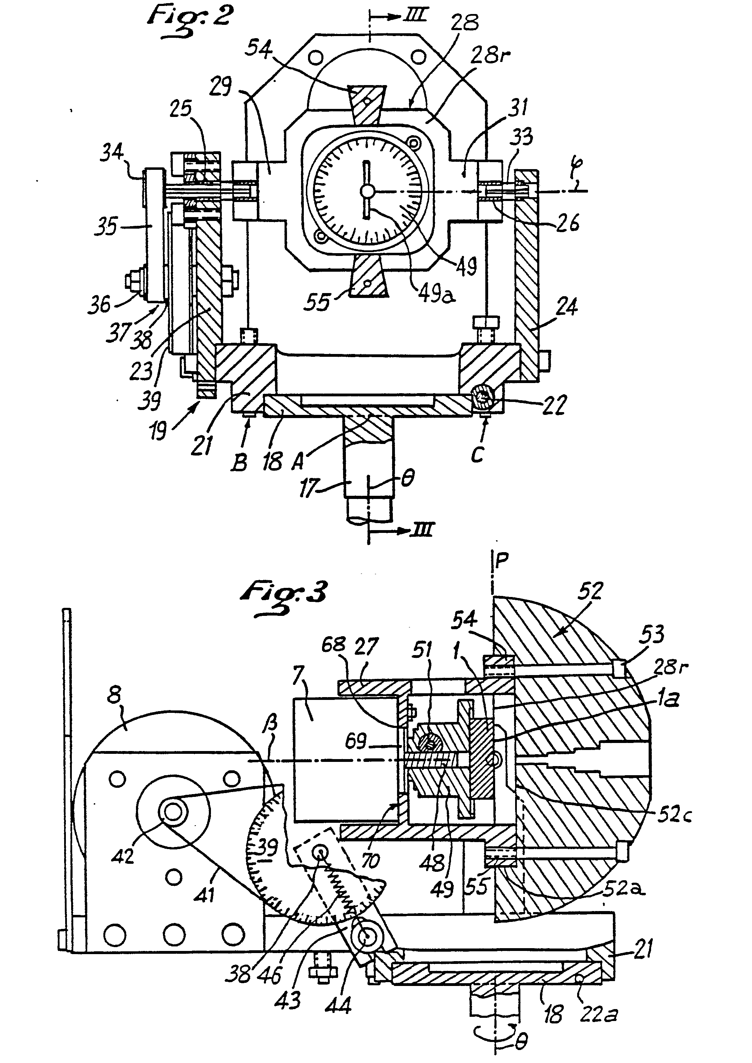

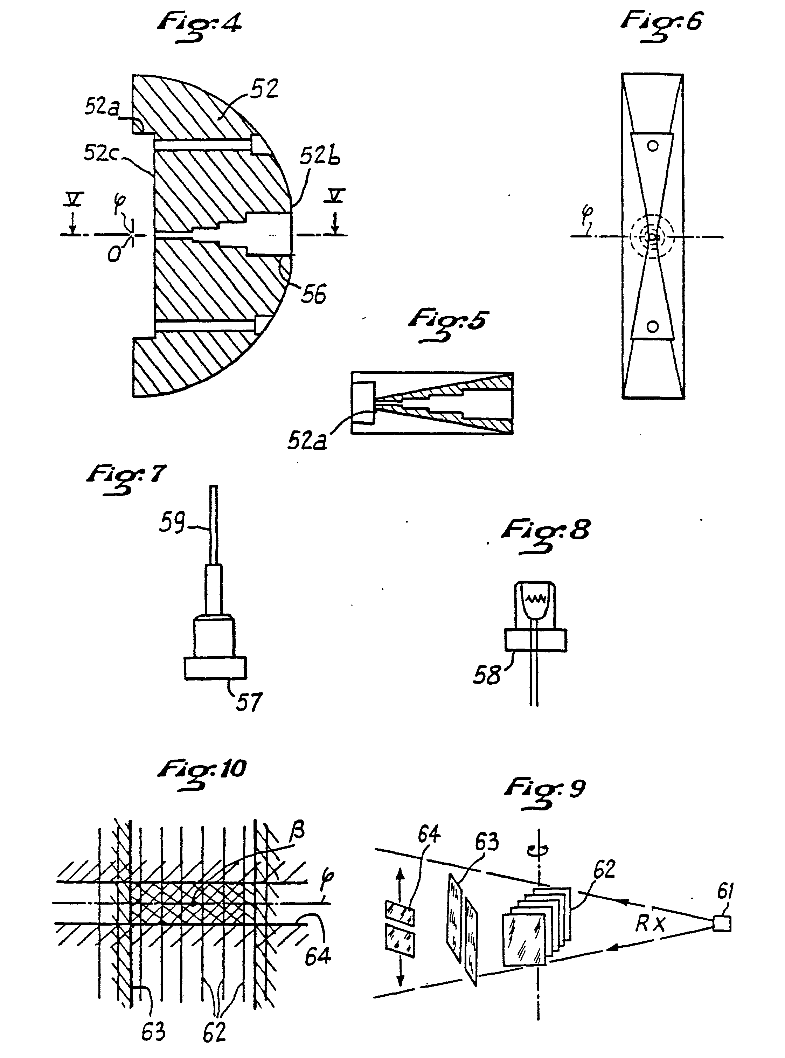

Pour permettre d'obtenir de grandes vitesses de rotation autour de l'axe $\varphi$, l'ensemble du boîtier 27 et des éléments qu'il contient, ensemble qui est situé en totalité d'un côté de l'axe $\varphi$, peut être équilibré, de l'autre côté de cet axe $\varphi$, par un contrepoids amovible 52 qui est fixé sur cet ensemble au moyen de vis 53. Ce contrepoids qui est représenté en détail sur les figures 4 à 6, a une section perpendiculaire à l'axe $\varphi$ de forme semi-circulaire et il présente deux faces latérales en forme de demi-cônes opposés par leurs sommets situés sur l'axe $\varphi$, pour éviter par exemple un effet d'écran à l'intérieur du domaine $\theta$ (0,85°), $\varphi$ ($\pm$ 90°) et il présente, dans sa face diamétrale, une entaille verticale 52a dans les deux extrémités de laquelle sont engagées respectivement deux pattes transversales supérieure 54 et inférieure 55 prolongeant respectivement vers le haut et vers le bas la bride transversale 28. Dans ces pattes sont formés des trous filetés dans lesquels sont engagées les extrémités des vis de blocage 53. Par ailleurs le contrepoids 52 présente, dans sa partie médiane, un perçage radial et horizontal 56 destiné à recevoir un organe permettant de réaliser la mise en position précise de la zone analysée de l'échantillon 1. Cet organe peut être constitué par un calibre 57 (figure 7) ou un émetteur 58 de faisceaux lumineux (figure 8) qui sert à visualiser la zone qui sera analysée. Le calibre 57, comme d'ailleurs l'émetteur lumineux 58, comporte une tête relativement large venant prendre appui sur une face de référence 52b formée dans la surface externe du contrepoids 52. Cette tête est prolongée par une tige 59 dont la longueur est choisie de telle façon que, lorsque la tête du calibre 57 est en appui sur la face de référence 52b, l'extrémité de la tige 59 se trouve située exactement au point 0 où doit se trouver le centre de la surface 1a de l'échantillon 1 d'où un second mode de positionnement de l'échantillon à utiliser suivant la forme de celui-ci. Pour la mise en place de celui-ci, il suffit donc d'engager le calibre 57 dans le perçage 56, en maintenant sa tête en appui contre la face de référence 52b, et faire ensuite coulisser le porte-échantillon 49 sur l'arbre 48, en direction de l'extérieur, jusqu'à ce que la surface externe 1a de l'échantillon 1 vienne en contact avec l'extrémité de la tige 59. Ainsi la zone plane d'analyse peut être en dépression dans l'échantillon. A ce moment on immobilise le porte-échantillon 49 sur l'arbre 48, au moyen du tampon tangent 51. La surface d'analyse 1a de l'échantillon 1 se trouve alors située dans le plan de référence P.

La face 52c constituant le fond de l'entaille verticale 52a peut être plus ou moins proche du plan de référence 28r (figure 3) pour atténuer plus ou moins le rayonnement diffusé incident.

L'avantage du dispositif de réglage de la position de l'échantillon 1 qui vient d'être décrit est sa grande simplicité associée à une excellente fiabilité de la mise en position et à la possibilité d'effectuer des rotations très rapides (dix tours/s). Cette rotation rapide est due au fait que le porte-échantillon 49 est accouplé directement à l'arbre de sortie 48 du moteur pas à pas 7. Ce moteur doit comporter un plan de référence 70 et une tolérance d'orthogonalité de l'axe par rapport à ce plan. Un auto-centrage de l'axe de ce moteur est réalisé grâce à un perçage 68 et à un épaulement 69 sur le moteur ; ainsi l'axe $\beta$ vient intercepter au même point les deux axes $\varphi$ et $\theta$.

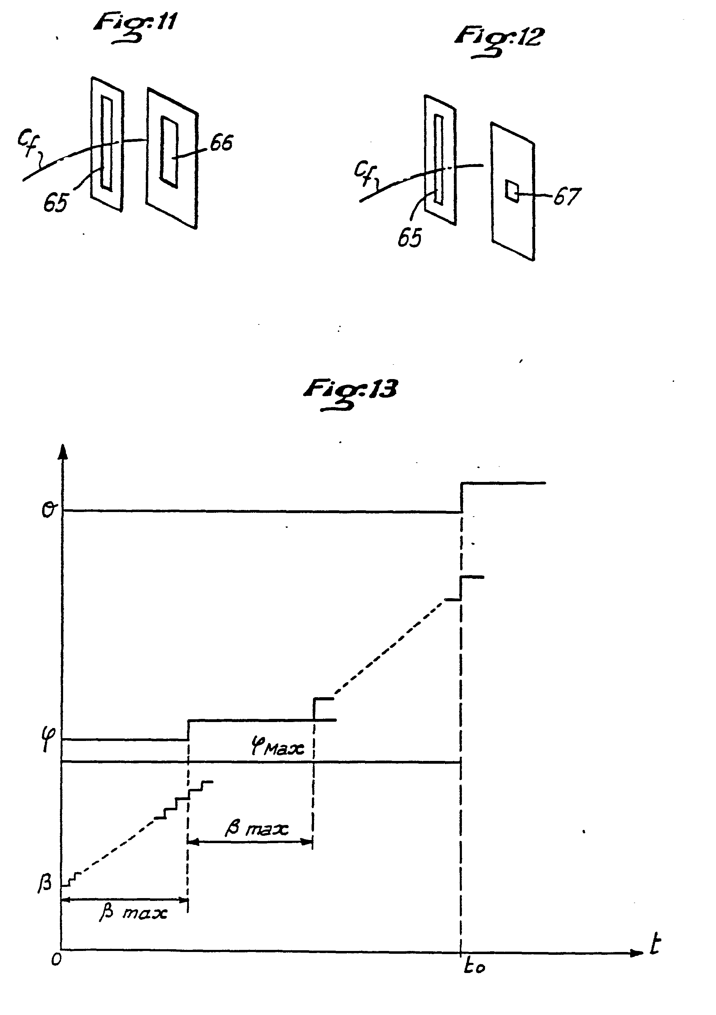

On décrira maintenant, en se référant plus particulièrement aux figures 9 et 10, une forme d'exécution d'un dispositif de focalisation ou collimation du faisceau de rayons X incident $f_i$ qui peut être utilisé à la place d'un dispositif standard. La source de rayons X utilisée est le foyer point 61 du tube à rayons X et le faisceau de rayons X émis traverse tout d'abord un ensemble de fentes Sollers verticales 62, mobiles en rotation autour d'un axe vertical, puis à travers une fente verticale 63, de largeur variable (interchangeable), puis à travers une fente horizontale 64 de largeur variable (interchangeable) et de hauteur réglable par vis. Ce dispositif de focalisation permet de réaliser une mise au point très fine et d'obtenir un excellent alignement de l'ensemble goniométrique. Par ailleurs il atténue très fortement les effets de défocalisation, les effets géométriques et les effets d'absorption qui nuisent à la qualité des mesures.

La figure 10 illustre l'effet d'écran dû aux diverses fentes du dispositif de collimation, dans le plan de l'échantillon.

Le dispositif de collimation du faisceau diffracté $f_r$ peut comprendre, dans la forme d'exécution illustrée sur la figure 11, une fente fine verticale 65 sur le cercle de focalisation $C_f$ du goniomètre et une autre fente ligne verticale 66 située en avant de la précédente.

Dans la variante d'exécution illustrée sur la figure 12 la fente ligne 66 est remplacée par un point d'entrée 67.

D'autre part grâce à l'interchangeabilité des fentes d'entrée 63 et 64 et de sortie 65 et 66 il est possible d'ajuster la divergence des faisceaux de rayons X (incident et diffracté) aux dimensions de la zone à analyser.

La logique de commande 9 associée à l'horloge 12 et à l'ordinateur 11 permet de régler la valeur des différents incréments $\Delta\theta$, $2\,\Delta\theta$, $\Delta\beta$ et $\Delta\varphi$, leurs durées et leurs maxima en $\theta_{Max}$, $\beta_{Max}$ et $\varphi_{Max}$ pour une analyse donnée. Elle cadence également le transfert des données du compteur 5 en direction de l'ordinateur 11. Enfin elle permet l'affichage instantané des différents angles.

La logique 9 permet d'effectuer les analyses suivant des modes différents à partir de circuits dont les schémas sont représentés sur les figures 14 à 18.

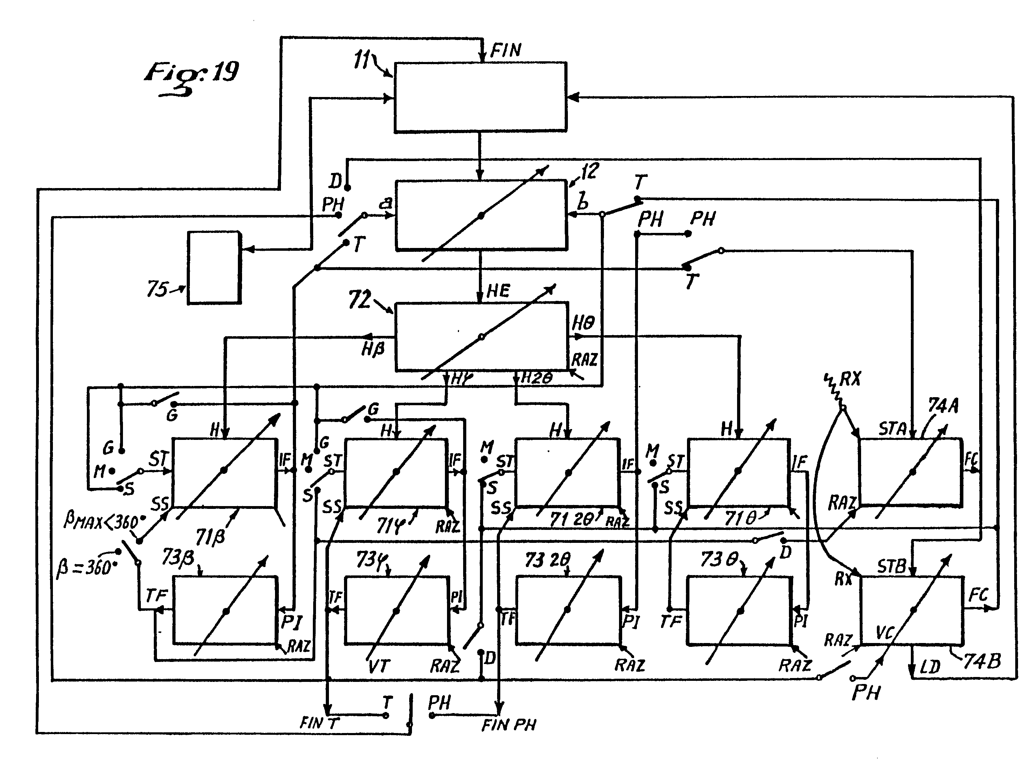

Sur la figure 14 est représenté un circuit 71 de commande du pas, qui apparaît en quatre exemplaires $71_\theta$, $71_{2\theta}$, $71_\beta$, $71_\varphi$ sur le schéma général de la logique représentée sur la figure 19. Ce circuit de commande du pas comprend sept entrées/sorties de signaux logiques dont cinq entrées à savoir une entrée H d'un signal d'horloge qui contrôle la vitesse de rotation du moteur associé lors de l'exécution d'un incrément égal à x pas élémentaires de moteur pas à pas associé, une entrée ST d'un signal de départ qui contrôle l'instant de démarrage de l'incrément angulaire du moteur correspondant, une entrée SS d'un signal indiquant le sens de rotation du moteur, une entrée V d'un signal réglant l'amplitude de l'incrément, et une entrée RAZ d'un signal de remise à zéro, d'une part, et deux sorties M d'un signal de puissance, connectée au moteur associé, et IF d'un signal indiquant que l'incrément a été effectué, d'autre part.

Sur la figure 15 est représenté un circuit 72 synthétiseur d'impulsion d'horloge avec huit entrées/sorties de signaux logiques à savoir :

trois entrées comprenant :

— une entrée HE d'un signal d'horloge extérieure qui remplace, dans le mode externe, l'horloge interne,

— une entrée VF d'un signal réglant le rapport de division de fréquence d'horloge et

— une entrée RAZ de blocage et de remise à zéro, et cinq sorties à savoir :

— les sorties $H_\theta$, $H_\beta$, $H_\varphi$, $H_{2\theta}$, HC affectées respectivement au contrôle des vitesses de rotation des différents mouvements et aux acquisitions.

Sur la figure 16 est représenté un circuit sommateur 73 qui est utilisé en quatre exemplaires $73_\beta$, $73_\varphi$, $73_\theta$, $73_{2\theta}$ dans le schéma général de la figure 19, chacun de ces circuits comprenant quatre entrées/sorties logiques à savoir :

— trois entrées : une entrée d'un signal PI correspondant aux pas à compter, une entrée RAZ d'un signal de blocage et de remise à zéro et entrée VT d'un signal pour la sélection du total des pas à atteindre et,

— une sortie TF d'un signal indiquant que le total des pas sélectionnés a été obtenu (cycle fait ou tour fait ou fin du domaine angulaire atteint).

Sur la figure 17 est représenté le circuit 74 qui est un compteur « temps » ou « coups » classique avec six entrées/sorties, à savoir :

quatre entrées, à savoir :

— une entrée RX d'un signal logique lié à l'arrivée d'un photon dans le détecteur,

— une entrée STA (ou STB) d'un signal de départ pour le déclenchement du comptage,

— une entrée VC d'un signal de sélection du type de comptage (en temps ou coups) et, soit du temps $T_0$ d'intégration ou du nombre de coups à compter, ou bien, de blocage du comptage (commande externe),

— une entrée RAZ de remise à zéro, et deux sorties, à savoir

— une sortie FC d'un signal indiquant que le comptage a été effectué et

— une sortie LD de lecture et transfert des données du compteur « temps » ou « coups ».

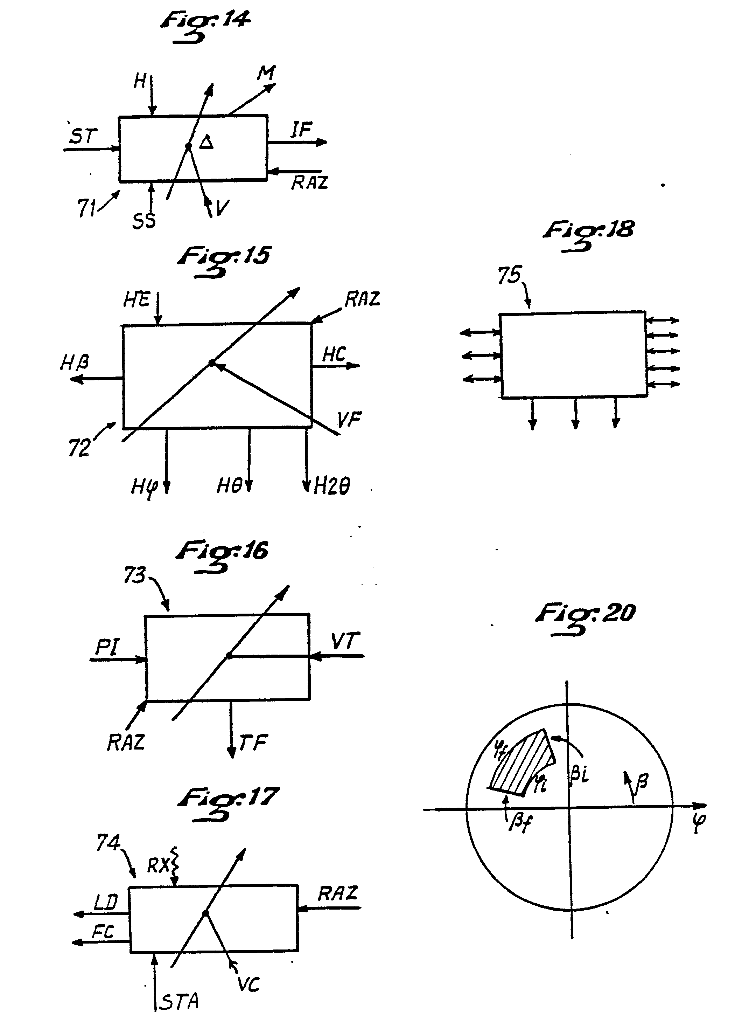

Sur la figure 18 est représenté le circuit 75 qui est un ensemble d'interconnexions, de commutation de commande manuelle ou automatique et d'initialisations à six rôles à savoir :

— 1. Remise à zéro générale ;

— 2. Commutations pour une commande manuelle des différents mouvements, des affichages et des prépositionnements initiaux ;

— 3. Commutations pour une commande automatique par l'ordinateur ;

— 4. Commande pour le contrôle des sens des rotations des différents mouvements qui peuvent être soit imposés pendant toute la mesure soit contrôlés par les circuits sommateurs 73 associés ;

— 5. Commutations pour l'interconnexion des différents circuits décrits ci-dessus afin de permettre de choisir parmi les deux modes d'analyse à savoir le mode séquentiel et le mode globalisé et les modes d'acquisition, systématique ou déclenché qui seront décrit en détail par la suite ;

— 6. Interconnexions avec l'ordinateur pour permettre les commandes par logiciel.

Sur la figure 19 apparaît un ensemble des circuits 71-75 constituant la logique de commande 9 et qui peuvent être interconnectés entre eux de différentes façons suivant le mode d'analyse utilisé. Sur ce schéma sont représentés divers commutateurs qui doivent être placés dans des positions différentes suivant le mode d'exploration sélectionné, à savoir la position M pour le mode manuel, S pour le mode séquentiel, et G pour le mode globalisé et le mode d'acquisition D pour le mode déclenché. D'autre part, sur le schéma de la figure 19 sont également indiqués, par les références PH et T, les types de mesures qui peuvent être effectuées et qui conditionnent les positions de certains commutateurs. La position PH correspond à un dosage de phase tandis que la position T correspond à une analyse de texture, autrement dit à une figure de pôle.

La logique 9 permet d'effectuer à partir des composants décrits ci-dessus les analyses suivant deux modes d'exploration différents à savoir :

I. Mode séquentiel : dans ce cas les mouvements et acquisition des données numériques s'enchaînent séquentiellement, comme il est illustré sur les figures 13 et 19, pour explorer le domaine $\theta - 2\theta$, $\beta$ ; $\varphi$ mesuré. Sur la figure 13 le temps t est porté en abcisse et la valeur de l'angle $\theta$, ou en ordonnée. $t_0$ indique le temps d'intégration d'une mesure à $\theta_i$ en mode analyse de phase (identification ou dosage) et $\varphi_{Max}$ la valeur maximale, choisie, que peut prendre l'angle $\varphi$ et qui correspond à un cycle. Dans le cas de ce mode séquentiel les divers commutateurs du schéma de la figure 19 sont placés dans la position S et on peut constater, d'après les schémas de la figure 19, l'enchaînement séquentiel des divers mouvements et dans le cas de l'analyse de phases la sortie TF du sommateur 73$_\beta$ est reliée à l'entrée de départ 71ST du circuit de commande de pas 71$_\varphi$ et de la même façon la sortie TF du circuit sommateur 73$_\varphi$ est reliée d'une part, par l'intermédiaire d'un commutateur en position PH (dosage de phase) à une entrée d'arrêt a de l'horloge 12 et d'autre part à l'entrée de blocage de comptage VC d'un compteur 74B. D'autre part la sortie FC du compteur 74B est reliée aux entrées ST des circuits de commande de pas 71$_\theta$ et 71$_{2\theta}$. De même on peut voir sur la figure 19 que la sortie IF correspondant au signal « incrément fait » du circuit 71$_{2\theta}$ est connectée, d'une part, à l'entrée de démarrage b de l'horloge 12, à l'entrée de démarrage STA du compteur 74A ou, à travers ce compteur, à l'entrée de démarrage STB de l'autre compteur 74B, et également à l'entrée de départ ST du circuit 71$_\beta$ de commande du pas en β.

II. Mode en temps globalisé : les mouvements θ — 2 θβ, et φ et l'acquisition des données sont contrôlés par la durée imposée à chacun. Ces différentes durées sont synthétisées et ajustées pour une parfaite coordination de l'ensemble des mouvements et de la saisie des données quelle que soit la vitesse choisie. Ce mode permet entre autre un gain de temps appréciable et une plus grande simplicité. Comme on peut le voir sur la figure 19 dans ce mode en temps globalisé on relie la sortie IF d'incrément fait de chaque circuit 71$_\beta$ et 71$_\varphi$ à son entrée ST de démarrage et par ailleurs toutes les entrées de démarrage ST des circuits 71$_\beta$ et 71$_\varphi$ sont reliées en commun et à FC du compteur 74B pour l'analyse de texture T, ou à IF du circuit 71$_{2\theta}$ pour l'analyse de phase PH. Dans ces conditions c'est le circuit synthétiseur 72 qui pilote directement les mouvements et grâce à l'horloge programmable 12 et à l'ordinateur 9 on peut faire en sorte que ces divers mouvements suivent des fonctions complexes. Par exemple le fonctionnement le plus fondamental est l'utilisation du mode en temps globalisé pour les circuits 71$_\beta$ et 71$_\varphi$ afin que les vitesses de β et φ suivent des fonctions dépendant de θ, φ et du matériau analysé, pour corriger automatiquement les effets de défocalisation, les effets géométriques et les effets d'absorption.

Pour chacun des modes d'exploration exposés ci-dessus (mode séquentiel et mode en temps global), on peut prévoir en outre deux processus d'acquisition différents, suivant que l'on fixe ou non un seuil à partir duquel une saisie de mesures est effectuée : (intégration du signal RX pendant un temps T$_0$ et le transfert de la donnée vers l'ordinateur).

III. Dans le processus d'acquisition « déclenché » les mouvements et les acquisitions des données dépendent de l'intensité du signal du faisceau diffracté f, reçu par le détecteur 4 ; le gain de temps d'acquisition est encore beaucoup plus important. Dans ce cas le signal FIN d'exploration (fin d'analyse de phase, fin d'analyse de texture, etc.) qui est envoyé par la logique, est utilisé par l'ordinateur, puisque le nombre de données reçues n'est pas connu à l'avance. Dans le cas d'analyse de plan ce signal FIN est fourni par la sortie TF du circuit sommateur 73$_{2\theta}$ ; dans le cas d'analyse de texture c'est la sortie TF du circuit 73$_\varphi$ qui génère ce signal FIN (figure 19).

Comme on peut le voir sur la figure 19 dans le cas du mode déclenché on utilise un deuxième compteur 74A, en plus du compteur 74B, qui ne permet l'acquisition que si l'intensité des rayons X reçus par le détecteur 4 est supérieure à une valeur minimale I$_0$. A ce moment les mouvements sont arrêtés aussitôt que cette valeur minimale I est détectée et on effectue alors une mesure et l'acquisition de l'intensité des rayons X au point de mesure considéré, et ensuite on reprend les mouvements jusqu'à ce qu'un nouveau point où l'intensité des rayons X reçus dépasse à nouveau la valeur minimale I$_0$, auquel cas les mouvements s'arrêtent et ainsi de suite jusqu'à l'analyse complète du domaine θ, 2 θ, β, φ désiré ; le signal FIN stoppera alors le programme en cours.

On donnera maintenant, dans ce qui va suivre, des exemples de mesures que l'on peut réaliser avec l'appareil suivant l'invention, sans que ces mesures puissent être considérées en aucune manière comme étant limitatives.

A titre d'exemple ces mesures sont les suivantes :

Exploration en θ — 2 θ avec β$_0$ fixé et φ$_0$ fixé (cas de l'analyse de phases standard pour φ$_0$ = 0 où le dosage de phases texturées n'est pas possible). Si on effectue plusieurs explorations θ — 2 θ identiques avec β fixé et en modifiant successivement φ on réalise les mesures de contrainte résiduelle en montage ψ.

Exploration en θ — 2 θ avec β tournant et φ$_0$ fixé (cas pour φ$_0$ = 0 de l'analyse de phases pour certains montages standard qui ne corrigent pas les effets de texture)...

Exploration en θ et — 2 θ avec β fixé et φ oscillant (entre zéro et φ$_{Max}$) c'est un cas nouveau pour l'analyse de phases texturées ; il est voisin de celui utilisé en mesure de contrainte résiduelle mais, en général, les mouvements sont alors beaucoup plus lents.

Exploration en θ — 2 θ avec β tournant et φ oscillant : cas nouveau pour l'analyse de phases texturées, φ effectuant par exemple un incrément chaque fois que β effectue un tour et cela dans une plage (φ$_{min}$, φ$_{max}$) pour chaque position θ, 2 θ.

Exploration en θ — 2 θ avec β tournant et φ oscillant dont les durées des pas en β et φ dépendent des angles et : cas de la correction automatique des effets de défocalisation sur des échantillons texturés.

Exploration à θ$_0$ et 2 θ$_0$ fixés et β tournant et φ oscillant : cas de l'analyse de textures classiques.

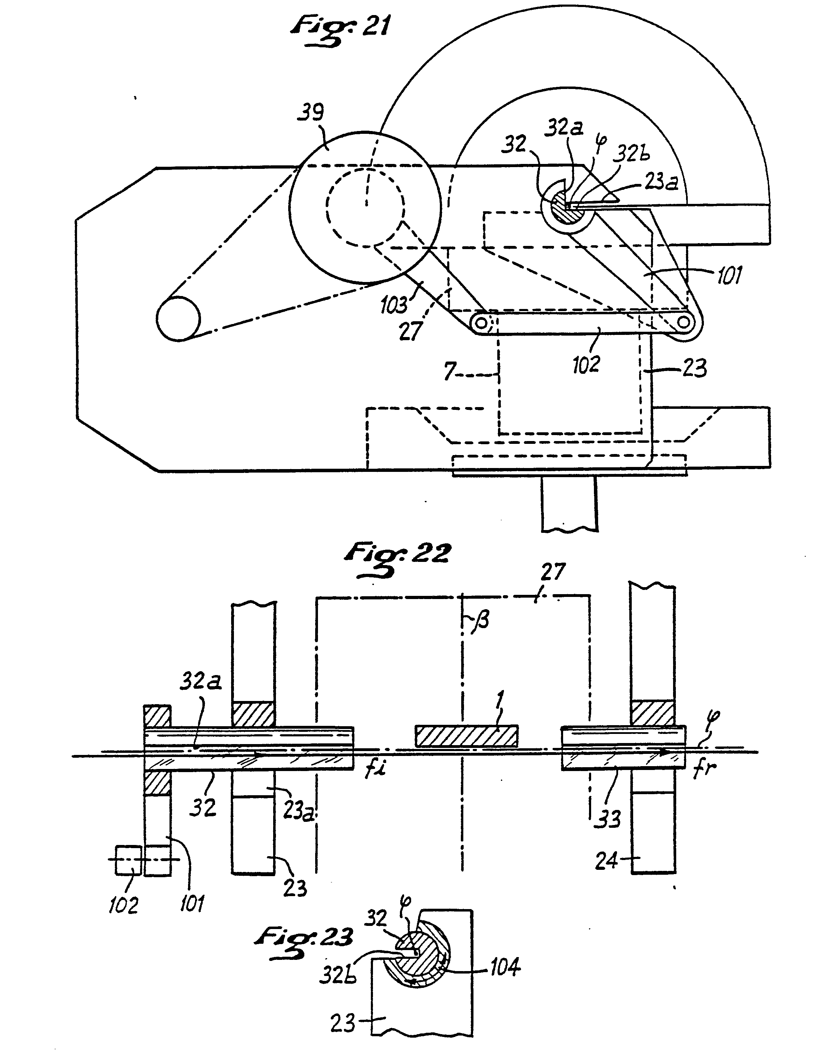

Exploration θ$_0$ et 2 θ$_0$ fixé, β variant entre une valeur initiale β$_i$ est une valeur finale β$_f$ et φ variant entre φ$_i$ initial et φ$_f$ final : cet exemple est illustré par la projection stéréographique de la figure 20 qui montre que le domaine à explorer peut être localisé à un domaine non circulaire et en l'occurrence à un secteur annulaire. La variation du sens de rotation en β peut être commandée par le circuit sommateur associé 73$_\beta$ dont le signal apparaissant à la sortie TF (cycle effectué) est alors réappliqué à l'entrée SS du circuit $71_\beta$ commandant le pas en β, pour inverser à chaque fois, le sens du mouvement β. De même la variation du sens de rotation en φ est obtenue en reliant TF de $73_\varphi$ à SS de $71_\varphi$.

L'appareil d'analyse suivant l'invention permet de réaliser des corrections supplémentaires pour effectuer des dosages ou toute mesure quantitative. En effet on peut reproduire exactement les mêmes mouvements de l'échantillon 1 vis-à-vis du faisceau de rayons X incident $f_i$ que lors d'une première acquisition rapide, mais toutefois en diminuant les vitesses des mouvements en associations avec une augmentation des temps d'acquisition de chaque point (amélioration du rapport signal/bruit). On peut procéder ainsi uniquement pour certains pics caractéristiques du diagramme de diffraction enregistré et on peut alors déterminer très précisément les corrections à apporter à ce diagramme. On peut ainsi compenser parfaitement l'effet de défocalisation, les effets géométriques et les effets d'absorption en fonction des angles et du matériau analysé.

Les vitesses des incréments Δβ et Δφ peuvent être variables en fonction du temps grâce au couplage de la logique avec l'horloge programmable : donc lors de l'exploration de l'espace θ, β, φ pour l'acquisition des données, Δβ et peuvent suivre des lois de variation (dépendant de θ, de φ et du matériau analysé) qui corrigent automatiquement les effets de défocalisation, les effets géométriques et les effets d'absorption.

Il est à remarquer qu'une analyse faite avec un angle φ égal à zéro permet de retrouver exactement les mêmes conditions d'analyse que dans un diffractomètre classique pour l'analyse des poudres.

On peut prévoir en outre deux processus d'acquisition différents, suivant que l'on fixe ou non un seuil à partir duquel la saisie d'une mesure est effectuée.

On donnera maintenant certaines caractéristiques techniques obtenues avec l'appareil suivant l'invention.

En ce qui concerne le mouvement θ, bien que celui-ci dépende également du goniomètre θ — 2 θ auquel est associé l'appareil suivant l'invention, la logique de commande 9 permet de piloter également ce déplacement. Le pas minimal en θ est de 0,001°, les pas Δθ que l'on peut utiliser sont de 0,01°, 0,02°, 0,04°, 0,08° ou des multiples entiers de 0,01°, à savoir k × 0,01° avec k inférieur à 1 024 : le domaine angulaire utilisable pour les mesures va de 0° à 85° en θ mais peut être élargi suivant le rayon du cercle goniométrique (distance entre le point 0 et le foyer de rayon X) ou la largeur du contrepoids.

En ce qui concerne le mouvement β, le pas minima Δβ est de 0,9°, la position absolue obtenue est meilleure que 1°, la position relative est à 0,054° près, le domaine angulaire couvert correspond à une rotation complète dans le sens positif ou négatif et la vitesse maximale est de 10/ts.

En ce qui concerne le mouvement φ, le pas minimal Δφ est de 0,5°, la position absolue obtenue est meilleure que 1°, la position relative est obtenue à 0,054° près, le domaine angulaire couvert est de 90° et la vitesse maximale est de 1 t/s.

Ces caractéristiques relatives aux mouvements θ, β et φ dépendent naturellement des moteurs pas à pas utilisés et elles ne sont limitées ni par la logique de commande ni par le montage mécanique.

De même il est évident que l'homme de l'art peut apporter au montage mécanique toute modification de forme ou de détail (due au changement par exemple de moteurs pas à pas ou à l'utilisation de codeurs absolus de position des arbres β, φ ou du goniomètre θ — 2 θ receveur) sans pour autant sortir du cadre de l'invention.

Enfin les trois parties essentielles de l'invention, à savoir :
— le dispositif mécanique supportant l'échantillon analysé
— le système de focalisation
— la logique de pilotage
constituent en elles-même des ensembles qui peuvent être associés, indépendamment les uns des autres, à un ensemble de diffractométrie de rayons X.

Dans la variante d'exécution illustrée sur les figures 21 et 22 chacun des arbres 32, 33 supportant en rotation l'ensemble comprenant le boîtier 27 contenant le moteur pas à pas 7 d'entraînement du porte-échantillon autour du deuxième axe β, est tronqué, sur sa longueur, d'un volume respectif ayant une section droite supérieure à un quadrant. Ce volume peut être délimité par deux faces longitudinales 32a, 32b, ainsi qu'il est illustré sur la figure 21, formant entre elles un dièdre d'angle égal ou supérieur à 90°. Les volumes de matière ainsi enlevés dans les deux arbres 32, 33 permettent le passage, le long de ces arbres, des faisceaux de rayons X incident et diffracté depuis l'incidence normale jusqu'à l'incidence rasante, et cela quel que soit φ de 0 à 90° ou plus suivant l'angle entre les deux faces 32a et 32b. Par ailleurs les montants supportant les arbres 32, 33 sont également fendus horizontalement, du côté avant, c'est-à-dire vers les faisceaux de rayons X incident et diffracté, pour permettre le passage de ces faisceaux. Par exemple on voit sur la figure 21 que le montant 23 dans la partie supérieure duquel est monté à rotation l'arbre 32, présente, au niveau de cet arbre 32, une fente horizontale 23a, débouchant à l'extérieur du montant vers l'avant, cette fente 23a ayant une largeur au moins égale à la hauteur du faisceau de rayon X, pour permettre le passage à travers elle de ce faisceau. L'arbre 32 qui est l'arbre d'entraînement du boîtier 27 en rotation, est également solidaire d'un bras radial 101 qui est accouplé, par l'intermédiaire d'une bielle 102, à un autre bras 103, parallèle au bras 101 et qui est solidaire de la poulie 39, en étant fixé radialement à cette poulie. Par conséquent la rotation de la poulie 39 provoque une rotation concomitante de l'arbre tronqué 32, par suite de l'existence du parallélogramme déformable constitué pars les deux bras parallèles 101, 103, et la bielle 102.

Dans la variante de réalisation illustrée sur la figure 23 l'arbre 132 n'est pas entraîné en rotation mais au contraire il est monté fixe sur son montant 23, en constituant ainsi un pivot. Cet arbre 132 présente, vers l'avant, une fente radiale 132b, s'étendant sur toute sa longueur et de largeur supérieure à la hauteur du faisceau de rayons X. Cet arbre 132 formant pivot est entouré d'un coussinet 104 qui est solidaire du boîtier 27 monté à rotation et qui peut tourner sur l'arbre formant pivot 132. Ce coussinet 104 est tronqué d'un volume supérieur à un quadrant comme il est illustré sur la figure 23, pour permettre le passage des faisceaux de rayons X incident et diffracté dans tout le domaine θ de 0° à 90° quel que soit φ située dans le domaine 0,90° au moins...

## Revendications

1. Appareil d'analyse de phases par diffraction de rayons X sur un échantillon texturé ou non comportant une source de rayons X émettant, en direction d'un échantillon monté sur un support, un faisceau de rayons X incident, un détecteur de photons recevant le faisceau de rayons X diffracté par l'échantillon, un goniomètre du type θ — 2 θ pour faire varier l'angle d'incidence (θ) du faisceau de rayons X tombant sur l'échantillon et pour déplacer d'un angle (2 θ) correspondant le détecteur de photons, au moins un compteur électronique connecté d'une part au détecteur de photons et d'autre part à un ordinateur servant au traitement de données numériques, et des moteurs pas à pas pour déplacer le porte-échantillon autour de deux axes supplémentaires concourants (β et φ), à savoir un deuxième axe (β) toujours normal au plan de l'échantillon et un troisième axe (φ) perpendiculaire au premier axe (θ) et au deuxième axe (β) et tangent au cercle de focalisation, caractérisé en ce qu'au moins le moteur (7) commandant le mouvement autour du deuxième axe (β) est en prise directe avec le porte-échantillon (49) et le boîtier (27) contenant le moteur (7) d'entraînement du porte-échantillon (49) est lui-même monté à rotation, autour du troisième axe (φ), sous la commande directe ou indirecte du moteur pas à pas associé (8), par l'intermédiaire de deux éléments coaxiaux (32, 33 ; 104) disposés des deux côtés du boîtier et solidaires de celui-ci, qui sont montés à rotation sur des montants (23, 24), ou sur des pièces rapportées sur ces montants, ces montants ou ces pièces fixes étant fendus horizontalement, du côté avant c'est-à-dire vers les faisceaux de rayons X incident et réfléchi, au niveau de ces faisceaux, la largeur de chaque fente étant au moins égale à la hauteur de ces faisceaux de rayons X, chaque élément rotatif solidaire du boîtier étant lui-même tronqué sur sa longueur d'un volume ayant une section droite supérieure à un quadrant pour permettre le passage, le long de ces éléments rotatifs, de faisceaux de rayons X incident et diffracté depuis une incidence rasante (θ = 0°) jusqu'à l'incidence normale (θ = 90°) quel que soit l'angle φ du boîtier (27) situé dans le domaine φ (0,90) au moins.

2. Appareil suivant la revendication 1 caractérisé en ce qu'il comporte une unité amovible (19) commandant les mouvements de rotation suivant le deuxième axe (β) et le troisième axe (φ) et qui est montée sur une platine transversale (18) entraînée en rotation autour de l'axe (θ — 2 θ) par le premier moteur pas à pas (6) qui peut faire partie du goniomètre (θ — 2 θ).

3. Appareil suivant la revendication 2 caractérisé en ce que l'unité amovible (19) comporte, une embase (21) bloquée sur la platine (18) au moyen d'une vis (22) dans une seule position possible définie par trois points d'appui (A, B, C) de telle façon que le troisième axe (φ) soit situé dans un plan vertical contenant le premier axe (θ) et qu'il soit perpendiculaire à ce premier axe (θ).

4. Appareil suivant la revendication 3 caractérisé en ce que l'embase (21) de l'unité amovible (19) est solidaire des deux montants (23, 24) fendus horizontalement et portant, à leurs extrémités supérieures, des paliers respectifs fendus (25, 26) supportant l'ensemble basculant autour du troisième axe (φ), cet ensemble comprenant le moteur pas à pas (7) commandant la rotation de l'échantillon (1) autour du deuxième axe (β).

5. Appareil suivant la revendication 4 caractérisé en ce que le boîtier (27) contenant le moteur pas à pas (7) et qui est articulé sur les deux montants (23, 24) par l'intermédiaire de petits arbres respectifs (32, 33) percés axialement, l'un de ces arbres (33) constitue un tourillon tandis que l'autre arbre (32) constitue un arbre d'entraînement en rotation accouplé mécaniquement à l'ensemble basculant et relié à l'arbre de sortie du moteur pas à pas (8) commandant la rotation autour du troisième axe (φ), lequel est monté sur l'embase (21) de l'unité amovible (19).

6. Appareil suivant la revendication 5, caractérisé en ce que le boîtier (27) se termine, à son extrémité antérieure par une bride transversale (28) fraisée pour matérialiser le plan tangent au cercle de focalisation en formant une face de référence (28r).

7. Appareil suivant l'une quelconque des revendications 5 et 6 caractérisé en ce que l'arbre (32) est solidaire d'un bras radial (101), qui est relié, par l'intermédiaire d'une bielle (102), à un autre bras radial (103), parallèle au bras (101) et qui est solidaire d'un organe d'entraînement constitué par un organe de sortie (39) d'un réducteur de vitesse (37) ou par l'arbre du moteur pas-à-pas (8), un ressort de rappel (46) étant prévu pour compenser les jeux.

8. Appareil suivant l'une quelconque des revendications 4 à 7 caractérisé en ce que le porte-échantillon (49) est immobilisé axialement sur l'arbre (48) du moteur (7), dans une position réglable, au moyen d'un tampon de blocage (51).

9. Appareil suivant la revendication 8, caractérisé en ce que le porte-échantillon (49) présente, dans sa face frontale, une fente diamétrale (49a) de très faible largeur, contenue dans un plan passant par le deuxième axe (β), cette fente permettant l'insertion d'une lame mince en vue de son analyse en transmission.

10. Appareil suivant l'une quelconque des revendications 4 à 9 caractérisé en ce que l'ensemble basculant comprenant le boîtier (27), le moteur pas à pas (7) et le porte-échantillon (49) et qui est situé en totalité d'un côté du troisième axe ($\varphi$), est équilibré, de l'autre côté de ce troisième axe ($\varphi$), par un contrepoids amovible (52) qui est fixé sur cet ensemble au moyen de vis (53).

11. Appareil suivant la revendication 10 caractérisé en ce que le contrepoids amovible (52) a une section perpendiculaire au troisième axe ($\varphi$) de forme semi-circulaire et il présente deux faces latérales en forme de demi-cônes opposés par leurs sommets situés sur l'axe ($\varphi$) et il présente, dans sa face diamétrale, une entaille verticale (52a) délimitée par un fond (52c) qui joue le rôle d'écran sur le rayonnement RX diffusé sans écranter les faisceaux RX incident et diffracté, et dans les extrémités de laquelle sont engagées respectivement deux pattes transversales supérieure (54) et inférieure (55) solidaire du boîtier (27) de l'ensemble basculant, des trous filetés dans lesquels sont engagées les extrémités des vis de blocage (53), étant formés dans ces pattes (54, 55), et le contrepoids (52) présente dans sa partie médiane un perçage radial et horizontal (56) destiné à recevoir des organes permettant de réaliser la localisation et visualisation de la zone analysée, et la mise en position précise de l'échantillon (1), ces organes, constitués par un émetteur (58) de faisceau lumineux et un calibre (57) comportant des têtes relativement larges venant prendre appui sur une face de référence (52b) formée dans la surface externe du contrepoids (52).

12. Appareil suivant l'une quelconque des revendications précédentes caractérisé en ce qu'il comporte un dispositif de focalisation du faisceau de rayons X incident ($f_i$) comprenant, à partir du foyer point (61) du tube à rayons X constituant la source de rayons X, un ensemble de fentes Sollers verticales (62), mobiles en rotation autour d'un axe vertical, puis une fente verticale de largeur interchangeable (63) puis une fente horizontale (64) de hauteur réglable et de largeur interchangeable.

13. Appareil suivant l'une quelconque des revendications précédentes caractérisé en ce qu'il comporte un dispositif de collimation du faisceau de rayons X diffracté ($f_r$) comprenant une fente fine verticale (65) située sur le cercle de focalisation ($C_f$) du goniomètre et, derrière cette fente une autre fente fine verticale (66) ou un point d'entrée (67).

14. Appareil suivant l'une quelconque des revendications précédentes caractérisé en ce que les moteurs pas à pas (6, 6', 7, 8) prévus pour commander les mouvements autour des trois axes ($\theta$ — 2 $\theta$, $\beta$, $\varphi$) sont reliés respectivement à des sorties d'une logique de commande (9) qui comporte, pour chacun des mouvements autour des trois axes ($\theta$ — 2 $\theta$, $\beta$, $\varphi$), un circuit de commande de variation du pas de la rotation (71), un circuit sommateur des pas effectués (73), la logique comporte également un étage synthétiseur (72) de fréquences ($f_\beta$, $f_\varphi$, $f_\theta$ $f_{2\theta}$), associées respectivement à chacun des mouvements et enfin un circuit d'interconnexion, de commutation et d'initialisation ou de remise à zéro (75) commandé soit manuellement soit par l'ordinateur (automatique), qui relie les différents circuits de la logique (9) entre eux et également avec l'ordinateur (11) et une horloge (12) et le ou les compteurs (5), de manière que l'ordinateur (11) commande, conjointement avec l'horloge programmable (12) et la logique de commande (9), la coordination de l'ensemble des mouvements de rotation suivant les trois axes ($\theta$, — 2 $\theta$, $\beta$, $\varphi$), leurs vitesses, leurs durées ainsi que l'acquisition des intensités mesurées du faisceau de rayons X diffracté ($f_r$).

15. Appareil suivant la revendication 14, caractérisé en ce que la logique (9) possède deux modes de fonctionnement à savoir un mode séquentiel pour lequel les mouvements et les acquisitions des données numériques s'enchaînent séquentiellement et un mode en temps globalisé pour lequel les mouvements sont contrôlés par la durée imposée à chacun, ces différentes durées étant synthétisées par l'étage (72) et ajustées pour une parfaite coordination de l'ensemble des mouvements et de la saisie des données quelle que soit la vitesse choisie.

16. Appareil suivant la revendication 15, caractérisé en ce que la logique (9) possède deux types d'acquisition, une acquisition systématique et une acquisition déclenchée pour laquelle un seuil est fixé à partir duquel une saisie de mesure et le transfert de la donnée vers l'ordinateur sont effectués, et dans ce cas le signal (FIN) d'exploration du domaine ($\theta$, 2 $\theta$, $\beta$, $\varphi$) désiré, qui est envoyé par la logique (9), est utilisé par l'ordinateur pour stopper son programme en cours d'exécution.

**Claims**

1. Phase analysis apparatus by X-ray diffraction on a textured or non-textured sample comprising a source of X-rays emitting, in the direction of a sample mounted on a support, an incident beam of X-rays, a photodetector receiving the X-ray beam diffracted by the sample, a goniometer of the $\theta$ — 2 $\theta$ type to vary the angle of incidence ($\theta$) of the X-ray beam falling on the sample and for displacing by a corresponding angle (2 $\theta$) the photodetector, at least one electronic counter connected on the one hand to the photodetector and on the other hand to a computer serving for processing digital data, and step-by-step motors for displacing the sample-holder about two additional concurrent axes ($\beta$ and $\varphi$), namely a second axis ($\beta$) always normal to the plane of the sample and a third axis ($\varphi$) perpendicular to the first axis ($\theta$) and to the second axis ($\beta$) and tangential to the focussing circle, characterized in that at least the motor 7 controlling the movement about the second axis ($\beta$) is in direct mesh with the sample-holder 49 and the casing 27 containing the motor 7 for driving the sample-holder 49 is itself mounted to rotate, about the third axis (φ), under the direct or indirect control of the associated step-by-step motor 8, via two coaxial elements 32, 33 ; 104 disposed on the two sides of the casing and fast therewith, which are mounted to rotate on uprights 23, 24, or on pieces added on these uprights, these uprights or these fixed pieces being slit horizontally, on the front side, i.e. towards the incident and reflected X-ray beams, at the level of these beams, the width of each slit being at least equal to the height of these X-ray beams, each rotary element fast with the casing itself being truncated over its length by a volume having a cross section greater than a quadrant in order to allow the passage, along these rotary elements, of incident and diffracted X-ray beams from a glancing incidence (θ = 0°) up to normal incidence (θ . 90°) whatever the angle φ of the casing 27 located in the domain φ (0.90) at least.

2. Apparatus according to Claim 1, characterized in that it comprises a removable unit 19 controlling the movements of rotation about the second axis (β) and the third axis (φ) and which is mounted on a transverse plate 18 driven in rotation about axis (θ — 2 θ) by the first step-by-step motor 6 which may form part of the goniometer (θ — 2 θ).

3. Apparatus according to Claim 2, characterized in that the movable unit 19 comprises a base 21 blocked on the plate 18 by means of a screw 22 in one single position possible defined by three points of abutment A, B, C so that the third axis (φ) lies in a vertical plane containing the first axis (θ) and that it is perpendicular to this first axis (θ).

4. Apparatus according to Claim 3, characterized in that the base 21 of the removable unit 19 is fast with the two uprights 23, 24 slit horizontally and bearing, at their upper ends, respective slit bearings 25, 26 supporting the assembly pivoting about the third axis (φ), this assembly comprising the step-by-step motor 7 controlling the rotation of the sample 1 about the second axis (β).

5. Apparatus according to Claim 4, characterized in that the casing 27 containing the step-by-step motor 7 and which is articulated on the two uprights 23, 24 via small respective shafts 32, 33 pierced axially, one of these shafts 33 constitutes a journal, whilst the other shaft 32 constitutes a shaft for driving in rotation coupled mechanically to the pivoting assembly and connected to the driven shaft of the step-by-step motor 8 controlling the rotation about the third axis (φ), which is mounted on the base 21 of the removable unit 19.

6. Apparatus according to Claim 5, characterized in that the casing 27 terminates, at its front end, in a transverse flange 28 milled in order to materialize the plane tangential to the focussing circle, forming a reference face 28r.

7. Apparatus according to either one of Claims 5 and 6, characterized in that the shaft 32 is fast with a radial arm 101 which is connected, via a connecting rod 102, to another radial arm 103, parallel to arm 101 and which is fast with a drive member constituted by a driven member 39 of a speed reduction gear 37 or by the shaft of the step-by-step motor 8, a return spring 46 being provided to compensate the clearances.

8. Apparatus according to any one of Claims 4 to 7, characterized in that the sample-holder 49 is immobilized axially on the shaft 48 of the motor 7, in an adjustable position, by means of a blocking pad 51.

9. Apparatus according to Claim 8, characterized in that the sample-holder 49 presents, in its frontal face, a diametral slit 49a of very small width, contained in a plane passing through the second axis (β), this slit allowing the insertion of a thin blade with a view to its analysis in transmission.

10. Apparatus according to any one of Claims 4 to 9, characterized in that the pivoting assembly comprising the casing 27, the step-by-step motor 7 and the sample-holder 49 and which is located totally on one side of the third axis (φ), is balanced, on the other side of this third axis (φ), by a removable counterweight 52 which is fixed on this assembly by means of screws.

11. Apparatus according to Claim 10, characterized in that the removable counterweight 52 has a section perpendicular to the third axis (φ) of semi-circular form and it presents two lateral faces in the form of half-cones opposite by their apices located on the axis (φ) and it presents, in its diametral face, a vertical notch 52a defined by a bottom 52c which performs the role of screen on the diffused X-radiation without screening the incident and diffracted X-ray beams, and in the ends of which are respectively engaged two upper and lower transverse tabs 54 and 55 fast with the casing 27 of the pivoting assembly, threaded holes in which are engaged the ends of the blocking screws 53, being formed in these tabs 54, 55 and the counterweight 52 presents in its median part a radial and horizontal bore 56 adapted to receive members for effecting localization and display of the analyzed zone, and the placing in precise position of the sample 1, these members, constituted by a light beam emitter 58 and a template 57 comprising relatively wide heads coming into abutment on a reference face 52b formed in the outer surface of the counterweight 52.

12. Apparatus according to any one of the preceding Claims, characterized in that it comprises a device for focussing the incident X-ray beam (f_i) comprising, from the focus point (61) of the X-ray tube constituting the source of X-rays, an assembly of vertical Sollers slits 62, mobile in rotation about a vertical axis, then a vertical slit 63 of interchangeable width then a horizontal slit 64 of adjustable height and interchangeable width.

13. Apparatus according to any one of the preceding Claims, characterized in that it comprises a device for collimation of the diffracted X-ray beam (f_r) comprising a vertical fine slit 65 located on the focussing circle $C_f$ of the goniometer and, behind this slit, another vertical fine slit 66 or an entry point 67.

14. Apparatus according to any one of the preceding Claims, characterized in that the step-by-step motors 6, 6', 7, 8 provided to control the movements about the three axes $(\theta - 2\,\theta, \beta, \varphi)$ are respectively connected to outputs of a central logic 9 which comprises, for each of the movements about the three axes $(\theta - 2\,\theta, \beta, \varphi)$ a circuit 71 for controlling variation of the step of the rotation, a circuit 73 adding the steps effected, the logic also comprises a stage 72 synthesizer of frequencies ($f_\beta$, $f_\varphi$, $f_\theta$ $f_{2\theta}$, respectively associated with each of the movements and finally a circuit 75 for interconnection, switching and initialization or return to zero, controlled either manually or by the computer (automatic), which connects the different circuits of the logic 9 together and also with the computer 11 and a clock 12 and the or each counter 5, so that the computer 11 controls, jointly with the programmable clock 12 and the control logic 9, the coordination of the assembly of the movements of rotation about the three axes $(\theta - 2\,\theta, \beta, \varphi)$, their speeds, durations as well as the acquisition of the measured intensities of the diffracted X-ray beam $f_r$.

15. Apparatus according to Claim 14, characterized in that the logic 9 possesses two operational modes, namely a sequential mode for which the movements and the acquisitions of the digital data interlink sequentially and a mode in globalized time for which the movements are controlled by the duration imposed on each, these different durations being synthesized by the stage 72 and adjusted for a perfect coordination of the assembly of the movements and acquisition of data whatever the speed chosen.

16. Apparatus according to Claim 15, characterized in that the logic 9 possesses two types of acquisition, a systematic acquisition and a triggered acquisition for which a threshold is fixed from which a acquisition of measurement and the transfer of the datum towards the computer are effected, and in that case, the signal FIN of scanning of the desired domain $(\theta - 2\,\theta, \beta, \varphi)$, which is sent by the logic 9, is used by the computer to stop its program during execution.

**Patentansprüche**

1. Vorrichtung zur Phasenanalyse durch Röntgenstrahl-Diffraktion auf einer texturierten oder nicht texturierten Probe mit einer Quelle von Röntgenstrahlen, die in Richtung einer auf einem Träger angeordneten Probe ein auftreffendes Bündel von Röntgenstrahlen aussendet, mit einem Photonendetektor, der das von der Probe abgekenkte Bündel von Röntgenstrahlen empfängt, mit einem Goniometer des Typs $\theta - 2\,\theta$ zur Veränderung des Einfallwinkels ($\theta$) des auf die Probe einfallenden Röntgenstrahlenbündels und zur Verlagerung des Photonendetektors um einen entsprechenden Winkel ($2\,\theta$), mit wenigstens einer elektronischen Zählschaltung, die einerseits mit dem Photonendetektor und andererseits mit einem zur Verarbeitung der eingegebenen Zahlenwerte dienenden Rechner verbunden ist, und mit Schrittmotoren zur Verlagerung des Probenträgers um zwei zusätzliche, zusammenwirkende Achsen ($\beta$ und $\varphi$), nämlich eine zweite Achse ($\beta$), die immer normal zur Probenebene verläuft, und eine dritte Achse ($\varphi$), die rechtwinklig zur ersten Achse ($\theta$) und zur zweiten Achse ($\beta$) verläuft und den Fokussierungskreis tangiert, dadurch gekennzeichnet, daß wenigstens der die Bewegung um die zweite Achse ($\beta$) steuernde Motor (7) direkt mit dem Probenträger (49) zusammenwirkt und daß das den auf den Probenträger (49) einwirkenden Motor (7) enthaltende Gehäuse (27) seinerseits unter der direkten oder indirekten Steuerung des zugeordneten Schrittmotors (8) um die dritte Achse ($\varphi$) drehbar ist mittels zweier koaxialer Elemente (32, 33 ; 104), die auf beiden Seiten des Gehäuses angeordnet und mit ihm verbunden sind und auf Stützen (23, 24) oder auf von diesen Stützen gegragenen Elementen gelagert sind, wobei diese festen Stützen oder Elemente auf der Vorderseite, d.h. der dem auftreffenden und reflektierten Röntgenstrahl zugewandten Seite, in Höhe dieser Strahlbündel horizontal geschlitzt sind und die Breite jedes Schlitzes wenigstens gleich der Höhe dieser Röntgenstrahlenbündel ist, und daß jedes mit dem Gehäuse verbundene drehbare Element seinerseits in seiner Längsrichtung in einem Bereich ausgeschnitten ist, der größer als ein Quadrant ist, um längs dieser drehbaren Elemente die Passage der einfallenden und abgelenkten Röntgenstrahlenbündel zwischen einem streifenden Einfall ($\theta = 0°$) und einem normalen Einfall ($\theta = 90°$) zu ermöglichen, wie auch immer der Winkel des wenigstens im Bereich von $\varphi$ (0, 90) befindlichen Gehäuses (27) sein mag.

2. Vorrichtung nach Anspruch 1, dadurch gekennzeichnet, daß sie eine bewegliche Einheit (19) umfaßt, die die Bewegungen um die zweite Achse ($\beta$) und die dritte Achse ($\varphi$) steuert und die auf einer Querplatte (18) gelagert ist, die um die Achse ($\theta - 2\cdot\theta$) durch den ersten Schrittmotor (6) antreibbar ist, der ein Teil des Goniometers ($\theta - 2\,\theta$) sein kann.

3. Vorrichtung nach Anspruch 2, dadurch gekennzeichnet, daß die bewegliche Einheit (19) einen Sokkel (21) umfaßt, der mittels einer Schraube (22) in einer einzigen möglichen, durch drei Auflagepunkte (A, B, C) definierten Position derart gesichert ist, daß sich die dritte Achse ($\varphi$) in einer die erste Achse ($\theta$) enthaltenden Vertikalebene befindet und daß sie sich rechtwinklig zu dieser ersten Achse ($\theta$) erstreckt.

4. Vorrichtung nach Anspruch 3, dadurch gekennzeichnet, daß der Sockel (21) der beweglichen Einheit (19) an zwei horizontal geschlitzten Stützen (23, 24) befestigt ist, die an ihren oberen Enden zwei zugeordnete, geschlitzte Wellenlager (25, 26) tragen, die die Anordnung um die dritte Achse ($\varphi$) pendelnd stützen, wobei diese Anordnung den Schrittmotor (7) umfaßt, der die Drehung der Probe (1) um die zweite Achse (β) steuert.

5. Vorrichtung nach Anspruch 4, dadurch gekennzeichnet, daß das den Schrittmotor (7) enthaltende Gehäuse (27) auf den beiden Stützen (23, 24) durch ihnen zugeordnete, axial durchbohrte kleine Wellen (32, 33) gelenkig gelagert ist, von denen die eine Welle (33) einen Lagerzapfen bildet, während die andere Welle (32) eine Drehantriebswelle bildet, die mechanisch mit der pendelnden Anordnung gekuppelt und mit der die Bewegung um die dritte Achse (φ) steuernden Ausgangswelle des Schrittmotors (8) verbunden ist, die auf dem Sockel (21) der beweglichen Einheit (19) gelagert ist.

6. Vorrichtung nach Anspruch 5, dadurch gekennzeichnet, daß das Gehäuse (27) mit seinem vorderen Ende an einem gefrästen Querflansch (28) endet, um durch Bildung einer Bezugsfläche (28r) die den Fokussierkreis tangierende Ebene zu verkörpern.

7. Vorrichtung nach einem der Ansprüche 5 oder 6, dadurch gekennzeichnet, daß die Welle (32) fest mit einem Kurbelarm (101) verbunden ist, der durch eine Kuppelstange (102) mit einem weiteren, zu diesem Kurbelarm (101) parallelen Kurbelarm (103) verbunden ist, der fest an einem Antriebsorgan angebracht ist, das durch das Ausgangsorgan (39) einer Untersetzung (37) oder durch die Welle des Schrittmotors (8) gebildet wird, wobei zur Kompensation des Spiels eine Zugfeder (46) vorgesehen ist.

8. Vorrichtung nach einem der Ansprüche 4 bis 7, dadurch gekennzeichnet, daß der Probenträger (49) auf der Welle (48) des Motors (7) durch einen Feststeller (51) axial unbeweglich in einer einstellbaren Position festgelegt ist.

9. Vorrichtung nach Anspruch 8, dadurch gekennzeichnet, daß der Probenträger (49) an seiner Frontseite eine diametrale Öffnung (49a) von sehr geringer Breite aufweist, die sich in einer die zweite Achse (β) durchquerenden Ebene befindet, wobei diese Öffnung das Einsetzen eines dünnen Streifens für seine Analyse während des Durchlaufs gestattet.

10. Vorrichtung nach einem der Ansprüche 4 bis 9, dadurch gekennzeichnet, daß die pendelnde Anordnung, die das Gehäuse (27), den Schrittmotor (7) und den Probenträger (49) umfaßt und sich auf einer Seite der dritten Achse (φ) befindet, auf der anderen Seite der dritten Achse (φ) durch ein abnehmbares Gegengewicht (52) im Gleichgewicht gehalten wird, das durch Schrauben (53) an dieser Anordnung befestigt ist.

11. Vorrichtung nach Anspruch 10, dadurch gekennzeichnet, daß das abnehmbare Gegengewicht (52) rechtwinklig zur dritten Achse (φ) einen halbkreisförmigen Querschnitt besitzt und zwei Seitenflächen in Form von einander gegenüberliegenden Halbkegeln umfaßt, deren Spitzen sich auf der Achse (φ) befinden, und daß es auf seiner Diametralfläche einen vertikal verlaufenden Einschnitt (52a) besitzt, der von einem Boden (52c) begrenzt wird, der als Abschirmung für die zerstreute RX-Strahlung dient, ohne die einfallenden und gebeugten RX-Strahlenbündel abzuschirmen, und in dessen Enden Befestigungsklauen, nämlich eine obere Klaue (54) und eine untere Klaue (55) eingreifen, die fest mit dem Gehäusew (27) der pendelnden Anordnung verbunden sind, wobei an ihnen angebrachte Gewindebohrungen die Enden der Befestigungsschrauben (53) aufnehmen, und daß das Gegengewicht (52) in seinem mittleren Abschnitt eine radiale und horizontale Durchgangsbohrung (56) aufweist, die zur Aufnahme von Organen bestimmt ist, die die Lokalisierung und Beobachtung der Analysezone und die präzise Positionierung der Probe (1) gestatten, wobei diese Organe, die von einer Lichtquelle (58) und einem Kaliber (57) gebildet werden, relativ breite Köpfe aufweisen, die zum Anschlag an einer Bezugsfläche (52b) geeignet sind, die auf der Außenfläche des Gegengewichts (52) ausgebildet ist.

12. Vorrichtung nach einem der vorhergehenden Ansprüche, dadurch gekennzeichnet, daß sie eine Einrichtung zur Fokussierung des einfallenden Röntgenstrahlbündels (f$_i$) umfaßt, die ausgehend vom Brennpunkt (61) der die Quelle der Röntgenstrahlung bildenden Röntgenröhre eine Gruppe von vertikalen Soller-Öffnungen umfaßt, die um eine vertikale Achse drehbar sind, dann eine vertikale Öffnung (63) mit veränderbarer Breite und darauf eine horizontale Öffnung (64) mit einstellbarer Höhe und veränderbarer Breite.

13. Vorrichtung nach einem der vorhergehenden Ansprüche, dadurch gekennzeichnet, daß sie eine Einrichtung zur Kollimation des diffraktierten Röntgenstrahlbündels (f$_r$) umfaßt, die eine feine vertikale Öffnung (65) besitzt, die sich auf dem Fokussierkreis (C$_f$) des Goniometers befindet, sowie hinter dieser Öffnung eine andere feine vertikale Öffnung (66) oder einen Eintrittspunkt (67).

14. Vorrichtung nach einem der vorhergehenden Ansprüche, dadurch gekennzeichnet, daß die zur Steuerung der Bewegungen um die drei Achsen (θ — 2 θ, β, φ) dienenden Schrittmotoren (6, 6′, 7, 8) mit dem ihnen zugeordneten Ausgang einer Steuerlogik (9) verbunden sind, die für jede der Bewegungen um die drei Achsen (θ — 2 θ, β, φ) einen Steuerkreis (71) für die Veränderung der Rotationsschritte, sowie einen Kreis (73) zum Summieren der ausgeführten Schritte umfaßt, wobei die Logik gleichermaßen eine Synthetisierungsstufe (72) für die jeder der Bewegungen zugeordneten Frequenzen (f$_β$, f$_φ$, f$_θ$ f$_{2θ}$) umfaßt, und schließlich einen Kreis (75) zur Verbindung, Umschaltung und Initialisierung oder die Rückstellung auf Null, der entweder von Hand oder (automatisch) vom Rechner gesteuert wird und die verschiedenen Kreise der Logik (9) untereinander und zugleich mit dem Rechner (11), einer Uhr (12) und der Zählschaltung oder den Zählschaltungen (5) derart verbindet, daß der Rechner (11) im Zusammenwirken mit der programmierbaren Uhr die Koordination der Gesamtheit der Bewegungen um die drei Achsen (θ — 2 θ, β, φ), ihre Geschwindigkeit, ihre Dauer, wie auch die Erfassung der gemessenen Intensitäten des diffraktierten Röntgenstrahlbündels (f$_r$) steuert.

15. Vorrichtung nach Anspruch 14, dadurch gekennzeichnet, daß die Logik (9) zwei Betriebsweisen aufweist, nämlich eine sequentielle Betriebsweise, bei der die Bewegungen und die erfaßten numerischen Daten sequentiell verknüpft werden, und eine globalisierte Betriebsweise, bei der die Bewegungen durch die für sie aufgewandte Zeit gesteuert werden, wobei diese verschiedenen Zeiten durch die Stufe (72) synthetisiert und für eine vollkommene Koordination der Gesamtheit der Bewegungen und der Datenerfassung bei jeder Geschwindigkeit geregelt werden.

16. Vorrichtung nach Anspruch 15, dadurch gekennzeichnet, daß die Logik (9) zwei Arten der Erfassung aufweist, nämlich eine systematische Erfassung und eine ausgelöste Erfassung, bei der eine Schwelle festgelegt wird, von der ausgehend eine Datenerfassung und die Übertragung der Daten zum Rechner durchgeführt wird, wobei in diesem Fall das Signal (FIN) der Untersuchung des ausgewählten Bereichs ($\theta$, 2 $\theta$, $\beta$, $\varphi$) das von der Logik (9) ausgegeben wird, vom Rechner zum Stoppen seines Programms im Verlauf der Durchführung benutzt wird.

## Fig.1

Fig. 2

Fig. 3

Fig. 4

Fig. 6

Fig. 5

Fig. 7

Fig. 8

Fig. 10

Fig. 9

Fig.11

Fig.12

Fig.13

Fig.14

Fig.15

Fig.16

Fig.17

Fig.18

Fig.20

Fig. 19

EP 0 161 992 B1

Fig. 21

39

32  32a  φ  32b

23a

101

103

27

7

102

23

Fig. 22

27

β

32a

1

32

23a

fi

fr

33

24

102  101

23

Fig. 23

32  φ

32b

104

23